(19) Europäisches Patentamt
European Patent Office
Office européen des brevets

(11) EP 4 316 833 A1

(12) EUROPEAN PATENT APPLICATION
published in accordance with Art. 153(4) EPC

(43) Date of publication:
**07.02.2024 Bulletin 2024/06**

(21) Application number: **22781054.6**

(22) Date of filing: **30.03.2022**

(51) International Patent Classification (IPC):
***B32B 27/32*** *(2006.01)* ***C08F 210/02*** *(2006.01)*
***C08F 210/16*** *(2006.01)* ***C08L 23/08*** *(2006.01)*

(52) Cooperative Patent Classification (CPC):
**B32B 27/32; C08F 210/02; C08F 210/16; C08L 23/08**

(86) International application number:
**PCT/JP2022/015846**

(87) International publication number:
**WO 2022/210843 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021062157**
**04.03.2022 JP 2022033929**

(71) Applicants:
- **Mitsui Chemicals, Inc.**
  **Tokyo 104-0028 (JP)**
- **Prime Polymer Co., Ltd.**
  **Tokyo 104-0028 (JP)**

(72) Inventors:
- **MATSUBARA Shinya**
  **Ichihara-shi, Chiba 299-0108 (JP)**
- **HATO Kazuki**
  **Ichihara-shi, Chiba 299-0108 (JP)**
- **TATSUMI Shuhei**
  **Ichihara-shi, Chiba 299-0108 (JP)**
- **TAKAICHI Keisuke**
  **Takaishi-shi, Osaka 592-8501 (JP)**
- **TAMURA Naoya**
  **Sodegaura-shi, Chiba 299-0265 (JP)**
- **TANAKA Youichi**
  **Sodegaura-shi, Chiba 299-0265 (JP)**
- **KENGOYAMA Chihiro**
  **Sodegaura-shi, Chiba 299-0265 (JP)**
- **UEMATSU Yudai**
  **Kuga-gun, Yamaguchi 740-0061 (JP)**
- **YOSHINO Shota**
  **Kuga-gun, Yamaguchi 740-0061 (JP)**
- **TANAKA Yuta**
  **Kuga-gun, Yamaguchi 740-0061 (JP)**

(74) Representative: **J A Kemp LLP**
**80 Turnmill Street**
**London EC1M 5QU (GB)**

# (54) ETHYLENE-a-OLEFIN COPOLYMER, THERMOPLASTIC RESIN COMPOSITION, FILM, AND LAMINATE

(57) [Problem to be Solved] To provide an ethylene-α-olefin copolymer that is excellent in formability and particularly excellent in mechanical strength compared to conventional ones.

[Solution] A copolymer of ethylene and one or more α-olefins having 4 to 10 carbon atoms, satisfying the following requirements (1) to (7):
(1) the density is 890 to 925 kg/m$^3$;
(2) MFR (190°C, 2.16 kg load) is 3.0 to 15.0 g/10 min;
(3) MT (melt tension)/η* (shear viscosity) is 1.40 × $10^{-4}$ to 2.90 × $10^{-4}$ g/P;
(4) $0.01 \times 10^{-13} \times M_w^{3.4} \le \eta_0$ (zero shear viscosity) $\le 4.5 \times 10^{-13} \times Mw^{3.4}$;
(5)

$$-2.0 \le Mz/Mw - Mw/Mn \le 15;$$

(6) the number of vinyls and others is 0.1 to 1.0/1000 C; and
(7) a plurality of peaks is present in a melting curve of DSC.

EP 4 316 833 A1

## Description

Technical Field

The present invention relates to an ethylene-α-olefin copolymer and a thermoplastic resin composition including the ethylene-α-olefin copolymer, a film including the ethylene-α-olefin copolymer and the thermoplastic resin composition including the ethylene-α-olefin copolymer, and a laminate including the film.

Background Art

Ethylene polymers are used in a variety of shaping techniques and applications, and a variety of characteristics are required for ethylene polymers depending on the shaping technique and application. For example, in formation with a T-die, neck-in occurs in which the film edges shrink toward the center. When neck-in occurs, a phenomenon that the film width becomes smaller and the film edges become thicker compared to the film center occurs. Therefore, large neck-in causes problems such as a deterioration in product yield and the inability to fabricate products with the desired width. Problems such as draw-down or rupture of the melt film in blow molding and swaying or rupture of the melt film in inflation molding may occur. In order to reduce these problems, it is necessary to select ethylene-based polymers that have a high melt tension relative to their molecular weight.

Also, in formation with a T-die, regular thickness fluctuations that occur in the take-up direction of the film, called take-off surging (or draw resonance), may cause variations in mechanical strength at different locations due to uneven thickness of the film. In order to stably produce films with homogeneous film thickness, it is necessary to avoid take-off surging (draw resonance), but this is thought to require resin characteristics such that the degree of strain hardening of the elongational viscosity is increased along with an increase in the strain rate.

Ethylene polymers without long chain branches obtained using metallocene catalysts are excellent in mechanical strength, but have problems in formability. For example, neck-in becomes larger in formation with a T-die and take-off surging (draw resonance) occurs. High pressure low density polyethylene has a large melt tension and is excellent in formability such as neck-in, and its elongational viscosity exhibits strain rate hardenability, not causing take-off surging (draw resonance). However, high pressure low density polyethylene has a complicated long chain branched structure, making it inferior in mechanical strength such as tensile strength, tear strength, or impact resistance strength.

In order to solve such problems, a variety of ethylene polymers in which long chain branches are introduced have been disclosed. Patent Literature 1 proposes a composition of an ethylene polymer obtained using a metallocene catalyst and high pressure low density polyethylene. However, when the content of the high pressure low density polyethylene is large, it is expected that mechanical strength such as tensile strength, tear strength, or impact resistance strength will be inferior, and when the content of the high pressure low density polyethylene is small, improvement in melt tension will not be sufficient, and it is thus expected that deterioration in formability, such as large neck-in, will occur.

In addition, Patent Literature 2 discloses an ethylene polymer obtained by solution polymerization in the presence of a catalyst including ethylenebis(indenyl)hafnium dichloride and methylalumoxane; Patent Literature 3 discloses an ethylene polymer obtained by vapor phase polymerization in the presence of a catalyst including ethylenebis(indenyl)zirconium dichloride and methylalumoxane supported on silica; Patent Literature 4 discloses an ethylene polymer obtained by solution polymerization in the presence of a constrained geometry catalyst; and Patent Literature 5 discloses an ethylene polymer obtained by vapor phase polymerization in the presence of a catalyst including racemic and meso isomers of $Me_2Si(2\text{-}Me\text{-}Ind)_2$ and methylalumoxane supported on silica. It is described that these ethylene polymers have improved melt tension and superior formability compared to linear ethylene polymers with no long chain branches. However, their neck-in is still large. It is thus expected that the improvement in formability will not be sufficient. In addition, unlike high pressure low density polyethylene, the elongational viscosity of these ethylene polymers does not exhibit strain rate hardenability, and therefore, it is expected that take-off surging (draw resonance) will not be improved.

Patent Literature 6, 7, 8, and 9 discloses ethylene polymers or ethylene resin compositions, the ethylene polymers satisfying a specific relationship between the intrinsic viscosity and the weight average molecular weight, a specific relationship between the melt tension and the shear viscosity, or a specific relationship between the zero shear viscosity and the weight average molecular weight. These ethylene polymers have improved take-off surging (draw resonance), and have improved neck-in in formation with a T-die or inflation formability compared to conventional ethylene polymers in which long chain branches are introduced using a metallocene catalyst. However, further improvement in mechanical strength or improvement in transparency is desired. Although higher external haze due to minute irregularities on the film surface provides superior blocking resistance, superior transparency is desired from the viewpoint of visibility of contents and inspection of defects in the film. In addition, when ethylene polymers are used for, for example, bottles, transparency is desired as well.

Citation List

Patent Literature

Patent Literature 1: JP H07-026079A
Patent Literature 2: JP H02-276807A
Patent Literature 3: JP H04-213309A
Patent Literature 4: WO 93/08221
Patent Literature 5: JP H08-311260A
Patent Literature 6: JP 2006-233207A
Patent Literature 7: JP 2009-197225A
Patent Literature 8: WO 2013/099927
Patent Literature 9: JP 2014-177506A

Summary of Invention

Technical Problem

An object of the present invention is to provide an ethylene-$\alpha$-olefin copolymer that is excellent in formability and is also capable of forming a film that is particularly excellent in mechanical strength compared to conventionally known ethylene polymers, a thermoplastic resin composition including the polymer, and a film and a laminate obtained from the polymer or the thermoplastic resin composition.

A further object of the present invention is to provide an ethylene resin composition that is capable of producing a shaped article (for example, a film, and a multilayer film having the film) that is excellent in transparency, as well as a shaped article (for example, a film, and a multilayer film having the film) obtained from the ethylene resin composition.

Solution to Problem

As a result of diligent studies, the present inventors have found that impartment of specific melting characteristics and molecular structure into the polymer results in an ethylene-$\alpha$-olefin copolymer with no occurrence of take-off surging (draw resonance) in formation with a T-die, with small neck-in, and also with particularly excellent mechanical strength, leading to the completion of the present invention.

Furthermore, they have found that a composition including two kinds of ethylene polymers having specific melting characteristics and molecular structure is excellent in melt film stability in inflation molding, and can produce a shaped article (for example, a film, and a multilayer film having the film) that is excellent in mechanical strength, and furthermore, excellent in transparency, leading to the completion of an ethylene resin composition (Z) of the present invention.

The present invention relates to, for example, the following [1] to [16].

[1] An ethylene-$\alpha$-olefin copolymer (A) which is a copolymer of ethylene and one or more $\alpha$-olefins having 4 to 10 carbon atoms, and which satisfies the following requirements (1) to (7) :

(1) the density is in a range of 890 kg/m$^3$ or more and 925 kg/m$^3$ or less;
(2) the melt flow rate (MFR) at 190°C under a load of 2.16 kg is in a range of 3.0 g/10 min or more and 15.0 g/10 min or less;
(3) the ratio [MT/$\eta$* (g/P)] of the melt tension [MT (g)] at 190°C to the shear viscosity [$\eta$* (P)] at 200°C at the angular velocity of 1.0 rad/s is in a range of $1.40 \times 10^{-4}$ or more and $2.90 \times 10^{-4}$ or less;
(4) the zero shear viscosity [$\eta_0$ (P)] at 200°C and the weight average molecular weight (Mw) as measured by GPC-viscometry (GPC-VISCO) satisfy the following equation (Eq-1):

$$0.01 \times 10^{-13} \times Mw^{3.4} \leq \eta_0 \leq 4.5 \times 10^{-13} \times Mw^{3.4} \quad \ldots \text{(Eq-1)};$$

(5) the number average molecular weight (Mn), the weight average molecular weight (Mw), and the Z average molecular weight (Mz) as measured by GPC-viscometry (GPC-VISCO) satisfy the following equation (Eq-2):

$$-2.0 \leq Mz/Mw - Mw/Mn \leq 15 \quad ... \text{(Eq-2)};$$

(6) the total number of vinyls, vinylidenes, disubstituted internal olefins, and trisubstituted internal olefins per 1000 carbon atoms (number/1000 C) as measured by $^1$H-NMR is in a range of 0.1 or more and 1.0 or less; and
(7) a plurality of peaks is present in a melting curve obtained by differential scanning calorimetry (DSC).

[2] The ethylene-α-olefin copolymer (A) according to the above [1], further satisfying the following requirement (8):
(8) the ratio Mz/Mw of the Z average molecular weight (Mz) to the weight average molecular weight (Mw) as measured by GPC-viscometry (GPC-VISCO) is in a range of 4.0 or more and 25.0 or less.
[3] The ethylene-α-olefin copolymer (A) according to the above [1] or [2], further satisfying the following requirement (9):
(9) the intrinsic viscosity [[η] (dl/g)] measured in decalin at 135°C and the weight average molecular weight (Mw) as measured by GPC-viscometry (GPC-VISCO) satisfy the following equation (Eq-4):

$$0.8 \times 10^{-4} \times Mw^{0.776} \leq [\eta] \leq 1.65 \times 10^{-4} \times Mw^{0.776} \quad ... \text{(Eq-4)}.$$

[4] A thermoplastic resin composition (Y) comprising: the ethylene-α-olefin copolymer (A) according to any of the above [1] to [3], and a thermoplastic resin excluding the ethylene-α-olefin copolymer (A).
[5] The thermoplastic resin composition (Y) according to the above [4], wherein

the thermoplastic resin is an ethylene-α-olefin copolymer (B) satisfying the following requirements (a) to (d), and the composition is an ethylene resin composition (Z) having a mass faction ($W_A$) of the ethylene-α-olefin copolymer (A) that is 5% by mass or more and 90% by mass or less and a mass fraction ($W_B$) of the ethylene-α-olefin copolymer (B) that is 10% by mass or more and 95% by mass or less, with the proviso that the sum of $W_A$ and $W_B$ is 100% by mass:

(a) the density is in a range of 890 kg/m$^3$ or more and 930 kg/m$^3$ or less;
(b) the melt flow rate (MFR) at 190°C under a load of 2.16 kg is in a range of 0.1 g/10 min or more and 20 g/10 min or less;
(c) the ratio [MT/η* (g/P)] of the melt tension [MT (g)] at 190°C to the shear viscosity [η* (P)] at 200°C at the angular velocity of 1.0 rad/s is in a range of $1.0 \times 10^{-6}$ or more and $1.0 \times 10^{-4}$ or less; and
(d) the amount (%) of a component with a Log molecular weight of 5.8 or more in a molecular weight distribution curve obtained by GPC measurement is in a range of 0.01% or more and 5.0% or less.

[6] A film comprising the ethylene-α-olefin copolymer (A) according to any of the above [1] to [3] or the thermoplastic resin composition (Y) according to the above [4] or [5].
[7] The film according to the above [6], comprising the ethylene-α-olefin copolymer (A) according to any of the above [1] to [3].
[8] The film according to the above [6], comprising the thermoplastic resin composition (Y) according to the above [4] .
[9] The film according to the above [6], comprising the thermoplastic resin composition (Y) according to the above [5] .
[10] A laminate comprising a layer comprising the ethylene-α-olefin copolymer (A) according to any of the above [1] to [3] or the thermoplastic resin composition (Y) according to the above [4] or [5].
[11] The laminate according to the above [10], further comprising a substrate layer.
[12] The laminate according to the above [11], further comprising a barrier layer.
[13] The laminate according to any of the above [10] to [12], comprising the layer comprising the ethylene-α-olefin copolymer (A) according to any of the above [1] to [3].
[14] The laminate according to any of the above [10] to [12], comprising the layer comprising the thermoplastic resin composition (Y) according to the above [4].
[15] The laminate according to any of the above [10] to [12], comprising the layer comprising the thermoplastic resin composition (Y) according to the above [5].
[16] A method for producing a laminate, comprising extrusion-laminating the ethylene-α-olefin copolymer (A) according to any of the above [1] to [3] or the thermoplastic resin composition (Y) according to the above [4] or [5] between a substrate layer and a barrier layer.

## Advantageous Effects of Invention

The ethylene-α-olefin copolymer (A) and the thermoplastic resin composition (Y) including the polymer of the present invention are excellent in formability (that is, no take-off surging (draw resonance) occurs and neck-in is small in formation with a T-die) and can suitably produce a film, a laminate, and a container composed of the laminate that are particularly excellent in mechanical strength. In addition, the ethylene-α-olefin copolymer (A) and the thermoplastic resin composition (Y) including the polymer of the present invention are excellent in adhesive strength when they are used for an adhesive layer of a laminate, and are excellent in heat sealability when they are used for a heat seal layer of a laminate.

Furthermore, according to the ethylene resin composition (Z) of the present invention, a shaped article (in particular, a film) that is excellent in mechanical strength, and excellent in transparency can be suitably produced with excellent formability.

## Description of Embodiments

Hereinafter, the ethylene-α-olefin copolymer (A) according to the present invention will be specifically described.

### [Ethylene-α-olefin copolymer (A)]

The ethylene-α-olefin copolymer (A) according to the present invention is a copolymer of ethylene and one or more α-olefins having 4 to 10 carbon atoms, preferably ethylene and one or more α-olefins having 6 to 10 carbon atoms. Examples of the one or more α-olefins having 4 to 10 carbon atoms used for copolymerization with ethylene include 1-butene, 1-hexene, 4-methyl-1-pentene, 1-octene, and 1-decene.

The ethylene-α-olefin copolymer (A) of the present invention has the characteristics as shown by (1) to (7) below.

(1) The density is in the range of 890 $kg/m^3$ or more and 925 $kg/m^3$ or less, preferably 900 $kg/m^3$ or more and 920 $kg/m^3$ or less, and more preferably 900 $kg/m^3$ or more and 915 $kg/m^3$ or less.

When the density is equal to or larger than the lower limit, stickiness on the surface of the formed film is low, and when the density is equal to or smaller than the upper limit, the molded film has good low temperature sealability.

The density is dependent on the α-olefin content of the ethylene-α-olefin copolymer (A). The lower the α-olefin content, the higher the density, and the higher the α-olefin content, the lower the density. Since the α-olefin content of the ethylene-α-olefin copolymer (A) is determined by the composition ratio (α-olefin/ethylene) of α-olefin to ethylene in the polymerization system (for example, Walter Kaminsky, Makromol. Chem. 193, p. 606 (1992)), the ethylene-α-olefin copolymer (A) having a density in the above range can be produced by increasing or decreasing the α-olefin/ethylene.

Measurement of the density is carried out as follows.

The strand obtained at the time of MFR measurement is heat treated at 100°C for 30 minutes and left at room temperature for additional 1 hour, and then the density is measured by the density gradient tube method.

(2) The melt flow rate (MFR) is in the range of 3.0 g/10 min or more and 15.0 g/10 min or less, preferably 4.0 g/10 min or more and 10.0 g/10 min or less, and more preferably 5.0 g/10 min or more and 8.0 g/10 min or less.

When the melt flow rate (MFR) is equal to or larger than the lower limit, the shear viscosity of the ethylene-α-olefin copolymer (A) is not too high, and the extrusion load is good. When the melt flow rate (MFR) is equal to or smaller than the upper limit, the mechanical strength of the ethylene-α-olefin copolymer (A) is good.

The melt flow rate (MFR) is strongly dependent on the molecular weight. The smaller the melt flow rate (MFR), the larger the molecular weight, and the larger the melt flow rate (MFR), the smaller the molecular weight. It is also known that the molecular weight of ethylene polymers is determined by the composition ratio (hydrogen/ethylene) of hydrogen to ethylene in the polymerization system (for example, edited by Kazuo Soga et al., "Catalytic Olefin Polymerization", Kodansha Scientific Ltd., 1990, p. 376). Therefore, the melt flow rate (MFR) of ethylene polymers can be increased or decreased by increasing or decreasing the hydrogen/ethylene. The melt flow rate (MFR) is measured in accordance with JIS K 7210 under conditions of 190°C and 2.16 kg load.

(3) The ratio [MT/η* (g/P)] of the melt tension [MT (g)] to the shear viscosity [η* (P)] at 200°C at the angular velocity of 1.0 rad/s is in the range of $1.40 \times 10^{-4}$ to $2.90 \times 10^{-4}$, preferably $1.50 \times 10^{-4}$ to $2.70 \times 10^{-4}$, and more preferably $1.80 \times 10^{-4}$ to $2.45 \times 10^{-4}$.

When the MT/η* is equal to or larger than the lower limit, the ethylene-α-olefin copolymer (A) has a high melt tension relative to its molecular weight, and is thus excellent in formability. When the MT/η* is equal to or smaller than the upper limit, the ethylene-α-olefin copolymer (A) is excellent in mechanical strength.

The MT/η* is dependent on the long chain branch content in the ethylene polymer. The higher the long chain branch content, the larger the MT/η*, and the lower the long chain branch content, the smaller the MT/η*. The long chain

branch is defined as a branched structure with a length equal to or longer than the entanglement molecular weight (Me) included in the ethylene polymer (Me), and it is known that the melting properties and forming processability of the ethylene polymer are significantly changed by the introduction of long chain branches (for example, edited by Kazuo Matsuura et al., "Polyethylene Technical Guidebook", Kogyo Chosakai Publishing Co., Ltd., 2001, p. 32, 36).

The MT/η* can be adjusted depending on the type of a component (A) or a solid support (S) in the catalyst for olefin polymerization (X) as will be described later. Also, even when the same catalyst for olefin polymerization (X) is used, it is possible to adjust the MT/η* depending on the polymerization conditions or the polymerization process. For example, the MT/η* can be lowered by increasing the ethylene partial pressure. The MT/η* near the lower limit can be obtained under the production conditions in Example 12, which will be described later, and the MT/η* near the upper limit can be obtained under the production conditions in Example 10, which will be described later.

The melt tension [MT (g)] is measured as follows. The melt tension (MT) (unit; g) is determined by measuring the stress upon stretching at a constant speed. A capillary rheometer is used for the measurement (for example, in the Examples described later, a capillary rheometer manufactured by Toyo Seiki Seisaku-sho, Ltd.: CAPILOGRAPH 1D was used). The conditions are as follows: resin temperature of 190°C, melting time of 6 minutes, barrel diameter of 9.55 mmφ, extrusion speed of 15 mm/min, winding speed of 24 m/min (in the case where the melt filament is broken, winding speed is reduced by 5 m/min), nozzle diameter of 2.095 mmφ, and nozzle length of 8 mm.

The shear viscosity [η* (P)] at 200°C at the angular velocity of 1.0 rad/s is measured as follows. For the shear viscosity (η*), the angular velocity [ω (rad/s)] variance of the shear viscosity (η*) at a measurement temperature of 200°C is measured in the range of $0.01 \leq \omega \leq 100$. The measurement is performed using a viscoelasticity measurement apparatus (for example, in the Examples described later, a viscoelasticity measurement apparatus manufactured by Anton Paar GmbH, Physica MCR301, was used), using a parallel plate of 25 mmφ as the sample holder, and setting the sample thickness to about 2.0 mm. The measurement points are set to 5 points per ω digit. The strain amount is selected as appropriate in the range of 3 to 10% such that the torque in the measurement range can be detected and does not cause over-torque.

The sample used for the shear viscosity measurement is fabricated by press molding the measurement sample to a thickness of 2 mm using a molding machine (for example, in the Examples described later, a press molding machine manufactured by SHINTO Metal Industries Corporation was used) under the following conditions: preheating temperature of 190°C, preheating time of 5 minutes, heating temperature of 190°C, heating time of 2 minutes, heating pressure of 100 kgf/cm$^2$, cooling temperature of 20°C, cooling time of 5 minutes, and cooling pressure of 100 kgf/cm$^2$.

(4) The zero shear viscosity [$\eta_0$ (P)] at 200°C and the weight average molecular weight (Mw) as measured by GPC-viscometry (GPC-VISCO) satisfy the following equation (Eq-1):

$$0.01 \times 10^{-13} \times Mw^{3.4} \leq \eta_0 \leq 4.5 \times 10^{-13} \times Mw^{3.4} \ \ldots \ (\text{Eq-1}).$$

Preferably, they satisfy the following (Eq-1'):

$$0.1 \times 10^{-13} \times Mw^{3.4} \leq \eta_0 \leq 3.0 \times 10^{-13} \times Mw^{3.4} \ \ldots \ (\text{Eq-1'}).$$

More preferably, they satisfy the following (Eq-1''):

$$0.2 \times 10^{-13} \times Mw^{3.4} \leq \eta_0 \leq 2.0 \times 10^{-13} \times Mw^{3.4} \ \ldots \ (\text{Eq-1''}).$$

When the zero shear viscosity [$\eta_0$ (P)] is log-log plotted against the weight average molecular weight (Mw), resins whose elongational viscosity does not exhibit strain hardening, such as linear ethylene polymers with no long chain branches, have a slope that follows the power law with a slope of 3.4, whereas resins whose elongational viscosity exhibits strain rate hardening, such as high pressure low density polyethylene, exhibit a zero shear viscosity [$\eta_0$ (P)] that is lower than the power law (C Gabriel, H. Munstedt, J. Rheol., 47(3), 619 (2003)).

The relationship between the zero shear viscosity [$\eta_0$ (P)] and the weight average molecular weight (Mw) is considered to be dependent on the content and length of long chain branches in the ethylene polymer. It is considered that, the higher the long chain branch content and the shorter the length of long chain branches, the smaller the value of zero shear viscosity [$\eta_0$ (P)], and the lower the long chain branch content and the longer the length of long chain branches, the larger the value of zero shear viscosity [$\eta_0$ (P)].

When the zero shear viscosity [$\eta_0$ (P)] at 200°C is equal to or smaller than the upper limit, the elongational

viscosity of the ethylene polymer exhibits strain rate hardening, and therefore, no take-off surging (draw resonance) occurs. In addition, since the long chain branches are short and intermolecular entanglements are easily loosened, molecules in the ethylene resin composition (Z) are easy to be relaxed. Therefore, a film including the ethylene resin composition (Z) has less irregularities on the surface and is excellent in transparency.

The zero shear viscosity [$\eta_0$ (P)] can be adjusted depending on the type of the component (A) or the solid support (S) in the catalyst for olefin polymerization (X) as will be described later. Also, even when the same catalyst for olefin polymerization (X) is used, it is possible to adjust the zero shear viscosity [$\eta_0$ (P)] depending on the polymerization conditions or the polymerization process. For example, the zero shear viscosity [$\eta_0$ (P)] can be increased by increasing the ethylene partial pressure. The zero shear viscosity [$\eta_0$ (P)] near the lower limit can be obtained under the production conditions in Example 11, which will be described later, and the zero shear viscosity [$\eta_0$ (P)] near the upper limit can be obtained under the production conditions in Example 9, which will be described later.

The zero shear viscosity [$\eta_0$ (P)] at 200°C is measured as follows.

The angular velocity $\omega$ (rad/s) variance of the shear viscosity ($\eta$*) at a measurement temperature of 200°C is measured in the range of $0.01 \leq \omega \leq 100$. The measurement is performed using a viscoelasticity measurement apparatus (for example, in the Examples described later, a viscoelasticity measurement apparatus manufactured by Anton Paar GmbH, Physica MCR301, was used), using a parallel plate of 25 mm$\varphi$ as the sample holder, and setting the sample thickness to about 2.0 mm. The measurement points are set to 5 points per $\omega$ digit. The strain amount is selected as appropriate in the range of 3 to 10% so that the torque in the measurement range can be detected and does not cause over-torque.

The sample used for the shear viscosity measurement is fabricated by press molding the measurement sample to a thickness of 2 mm using a molding machine (for example, in the Examples described later, a press molding machine manufactured by SHINTO Metal Industries Corporation was used) under the following conditions: preheating temperature of 190°C, preheating time of 5 min, heating temperature of 190°C, heating time of 2 min, heating pressure of 100 kgf/cm$^2$, cooling temperature of 20°C, cooling time of 5 min, and cooling pressure of 100 kgf/cm$^2$.

The zero shear viscosity ($\eta_0$) is calculated by fitting the Carreau model of the following equation to a measured rheology curve [angular velocity ($\omega$) variance of shear viscosity ($\eta$*)] by a non-linear least squares method:

$$\eta^* = \eta_0[1 + (\lambda\omega)^a]^{(n-1)/a}$$

wherein $\lambda$ represents a parameter with the dimension of time, a represents a fitting parameter, and n represents the power law index of the material.

Fitting by the non-linear least squares method is carried out such that d in the following equation is minimized.

$$d = \sum_{\omega=0.02512}^{100}\left[Log_{10}\eta_{exp}(\omega) - Log_{10}\eta_{calc}(\omega)\right]^2$$

wherein $\eta_{exp}(\omega)$ represents the measured shear viscosity, and $\eta_{calc}(\omega)$ represents the shear viscosity calculated from the Carreau model.

The weight average molecular weight (Mw) and other parameters are measured by gel permeation chromatography (GPC) as follows.

A differential refractometer and a capillary viscometer are used as the detectors, the column temperature is set to 145°C, o-dichlorobenzene is used as the mobile phase, the flow rate is set to 1.0 ml/min, the sample concentration is set to 0.1% by weight, and polystyrene is used as the standard polymer. Note that, in the Examples described later, a GPC-viscometer (GPC-VISCO) PL-GPC220 manufactured by Agilent Technologies was used as the measurement apparatus, and two columns of Agilent PLgel Olexis were used as the analytical columns, and a standard polystyrene manufactured by Tosoh Corporation was used. As for molecular weight calculation, the measured viscosity is calculated from the viscometer and the refractometer, and the number average molecular weight (Mn), the weight average molecular weight

(Mw), the Z average molecular weight (Mz), and the molecular weight distribution (Mw/Mn, Mz/Mw) are determined from the measured universal calibration.

(5) The number average molecular weight (Mn), the weight average molecular weight (Mw), and the Z average molecular weight (Mz) as measured by GPC-viscometry (GPC-VISCO) satisfy the following equation (Eq-2):

$$-2.0 \leq Mz/Mw - Mw/Mn \leq 15 \quad ... \text{ (Eq-2)}.$$

Preferably, they satisfy the following equation (Eq-2'):

$$-1.5 \leq Mz/Mw - Mw/Mn \leq 12 \ ... \ (Eq\text{-}2').$$

More preferably, they satisfy the following equation (Eq-2"):

$$-1.0 \leq Mz/Mw - Mw/Mn \leq 10 \ ... \ (Eq\text{-}2'').$$

When the Mz/Mw - Mw/Mn is large, the molecular weight distribution spreads to the high molecular weight side. When the Mz/Mw - Mw/Mn is equal to or larger than the lower limit, it is excellent in the neck-in, and when the Mz/Mw - Mw/Mn is equal to or smaller than the upper limit, the thin film formability is excellent.

The Mz/Mw - Mw/Mn can be adjusted depending on the type of the component (A) or the solid support (S) in the catalyst for olefin polymerization (X) as will be described later. Also, even when the same catalyst for olefin polymerization (X) is used, it is possible to adjust the Mz/Mw - Mw/Mn depending on the polymerization conditions or the polymerization process. The Mz/Mw - Mw/Mn near the lower limit can be obtained under the production conditions in Example 2, which will be described later, and the Mz/Mw - Mw/Mn near the upper limit can be obtained by the polymerization conditions in Example 11, which will be described later.

The number average molecular weight (Mn), the weight average molecular weight (Mw), and the Z average molecular weight (Mz) are measured by the method described above.

(6) The number of vinyls, vinylidenes, disubstituted internal olefins (disubstituted vinylenes), and trisubstituted internal olefins (trisubstituted vinylenes) as measured by $^{1}$H-NMR satisfies the following equation (Eq-3):

$$0.1 \leq \text{vinyls + vinylidenes + disubstituted internal olefins + trisubstituted internal olefins} \leq 1.0 \ ... \ (Eq\text{-}3).$$

Preferably, it satisfies the following equation (Eq-3'):

$$0.3 \leq \text{vinyls + vinylidenes + disubstituted internal olefins + trisubstituted internal olefins} \leq 0.9 \ ... \ (Eq\text{-}3').$$

More preferably, it satisfies the following equation (Eq-3"):

$$0.5 \leq \text{vinyls + vinylidenes + disubstituted internal olefins + trisubstituted internal olefins} \leq 0.8 \ ... \ (Eq\text{-}3'').$$

The number of vinyls, vinylidenes, disubstituted internal olefins (disubstituted vinylenes), and trisubstituted internal olefins (trisubstituted vinylenes) in the polymer is the number per 1000 carbon atoms contained in the polymer, as measured by the $^{1}$H-NMR method. It is known that the production amount ratio and the number of vinyls, vinylidenes, disubstituted internal olefins, and trisubstituted internal olefins are increased or decreased depending on the transition metal compound used (H. SAIKI, S. MAKOTO, T. MASAO, S. MORIHIKO, Y. AKIHIRO, J. Polym. Sci., A: Polym. Chem., 38, 4641 (2000)). They can be adjusted depending on the type of the component (A) or the solid support (S) in the catalyst for olefin polymerization (X) as will be described later. Also, even when the same catalyst for olefin polymerization (X) is used, it is possible to adjust them depending on the polymerization conditions or the polymerization process. For example, they can be increased or decreased even by increasing or decreasing the ethylene partial pressure.

When the number of vinyls + vinylidenes + disubstituted internal olefins + trisubstituted internal olefins is equal to or larger than the lower limit, long chain branches are easily produced and the formability is excellent, while when the number of vinyls + vinylidenes + disubstituted internal olefins + trisubstituted internal olefins is equal to or smaller than the upper limit, the melt film of extrusion lamination is less susceptible to oxidation, the heat sealability is excellent, and the transparency and mechanical strength of the shaped article are also excellent.

The number of vinyl, vinylidene, disubstituted internal olefin, and trisubstituted internal olefin as measured by

$^1$H-NMR (500 MHz) is measured as follows, using a nuclear magnetic resonance apparatus (for example, in the Examples described later, the AVANCE III (cryoprobe) type nuclear magnetic resonance apparatus manufactured by Bruker was used).

The measurement mode is set to single pulse with a pulse width of 45°. The number of points is set to 32k, the observation range is set to 20 ppm (-6 to 14 ppm), the repetition time is set to 7 seconds, and the number of integrations is set to 64 times. 20 mg of the sample is dissolved in 0.6 ml of ortho-dichlorobenzene-d4 and then subjected to measurement at 120°C.

In the $^1$H-NMR spectrum, the number of double bond calculated from the signal integral values derived from various double bonds (vinyl, vinylidene, and internal olefin) at 4.5 ppm to 5.8 ppm and the relative value of all carbon atoms calculated from the total integral value of all $^1$H signals are determined to calculate the number of various double bonds per 1000 polymer carbon atoms.

(7) A plurality of peaks is present in the melting curve obtained by differential scanning calorimetry (DSC).

When a plurality of peaks is present, there are many low melting point components and the low temperature heat sealability is excellent.

Differential scanning calorimetry (DSC) is carried out as follows, using a differential scanning calorimeter (for example, in the Examples described later, Diamond DSC manufactured by PerkinElmer, Inc. was used).

About 5 mg of the sample into an aluminum pan is packed into an aluminum pan, heated to 200°C at 10°C/min, held at 200°C for 10 minutes, then cooled to -30°C at 10°C/min, and subsequently heated to 200°C at 10°C/min to obtain an endothermic curve. The presence of two or more peaks in this endothermic curve means that there is a plurality of peaks in the melting curve obtained by differential scanning calorimetry (DSC).

The ethylene-α-olefin copolymer (A) of the present invention preferably has the characteristic as shown by (8) below.

(8) The ratio (Mz/Mw) of the Z average molecular weight (Mz) to the weight average molecular weight (Mw) as measured by GPC-viscometry (GPC-VISCO) is in the range of 4.0 to 25.0, preferably 7.0 to 20.0, and more preferably 10.0 to 18.0. The larger the Mz/Mw, the more high molecular weight components. When the Mz/Mw is equal to or larger than the lower limit, it is excellent in the neck-in, and when the Mz/Mw is equal to or smaller than the upper limit, the thin film formability is excellent.

The Mz/Mw can be adjusted depending on the type of the component (A) or the solid support (S) in the catalyst for olefin polymerization (X) as will be described later. Also, even when the same catalyst for olefin polymerization (X) is used, it is possible to adjust the Mz/Mw depending on the polymerization conditions or the polymerization process. The Mz/Mw near the lower limit can be obtained under the production conditions in Example 2, which will be described later, and the Mz/Mw near the upper limit can be obtained by the polymerization conditions in Example 11, which will be described later.

The ethylene-α-olefin copolymer (A) of the present invention preferably has the characteristic as shown by (9) below.

(9) The intrinsic viscosity [[η] (dl/g)] measured in decalin at 135°C and the weight average molecular weight (Mw) as measured by GPC-viscometry (GPC-VISCO) satisfy the following equation (Eq-4):

$$0.8 \times 10^{-4} \times Mw^{0.776} \leq [\eta] \leq 1.65 \times 10^{-4} \times Mw^{0.776} \quad \ldots \text{(Eq-4)}.$$

Preferably, they satisfy the following (Eq-4'):

$$0.9 \times 10^{-4} \times Mw^{0.776} \leq [\eta] \leq 1.45 \times 10^{-4} \times Mw^{0.776} \quad \ldots \text{(Eq-4')}.$$

More preferably, they satisfy the following (Eq-4''):

$$1.0 \times 10^{-4} \times Mw^{0.776} \leq [\eta] \leq 1.30 \times 10^{-4} \times Mw^{0.776} \quad \ldots \text{(Eq-4'')}.$$

It is known that, when long chain branches are introduced into an ethylene polymer, the intrinsic viscosity [[η]

(dl/g)] becomes smaller relative to the molecular weight, compared to linear ethylene polymers with no long chain branches (for example, Walther Burchard, ADVANCES IN POLYMER SCIENCE, 143, Branched Polymer II, p. 137 (1999)). Therefore, when the intrinsic viscosity [[η] (dl/g)] is $1.65 \times 10^{-4} \times Mw^{0.776}$ or less, the ethylene polymer has many long chain branches and is excellent in formability and flowability.

The intrinsic viscosity [[η] (dl/g)] can be adjusted depending on the type of the component (A) or the solid support (S) in the catalyst for olefin polymerization (X) as will be described later. Also, even when the same catalyst for olefin polymerization (X) is used, it is possible to adjust the intrinsic viscosity [[η] (dl/g)] depending on the polymerization conditions or the polymerization process. For example, the intrinsic viscosity [[η] (dl/g)] can be increased by increasing the ethylene partial pressure. The intrinsic viscosity [[η] (dl/g)] near the lower limit can be obtained under the production conditions in Example 8, which will be described later, and the intrinsic viscosity [[η] (dl/g)] near the upper limit can be obtained under the production conditions in Example 9, which will be described later.

The intrinsic viscosity [[η] (dl/g)] is measured using a decalin solvent as follows. About 20 mg of the measurement sample is dissolved in 15 ml of decalin, and the specific viscosity ηsp is measured in an oil bath at 135°C. After diluting this decalin solution by adding 5 ml of a decalin solvent, the specific viscosity ηsp is measured in the same manner. This dilution operation is repeated two more times, and as shown by the equation below, the value of ηsp/C when the concentration (C) is extrapolated to 0 is determined as the intrinsic viscosity [η] (unit; dl/g).

$$[\eta] = \lim (\eta sp/C) \quad (C \rightarrow 0)$$

The weight average molecular weight (Mw) is measured by the method described above.

<u>[Method for producing ethylene-α-olefin copolymer (A)]</u>

Next, the method for producing the ethylene-α-olefin copolymer (A) of the present invention will be described.

The ethylene-α-olefin copolymer (A) of the present invention can be efficiently produced by polymerizing ethylene and one or more α-olefins having 4 to 10 carbon atoms in the presence of a catalyst for olefin polymerization (X) including the components described below.

<u>[Catalyst for olefin polymerization (X)]</u>

The catalyst for olefin polymerization (X) includes a component (A) and a solid support (S) described below.

<Component (A)>

The component (A) is a transition metal compound represented by the formula (1) below (hereinafter, also referred to as the "transition metal compound (1)"). The catalyst for olefin polymerization (X) includes at least one kind of transition metal compound (1). That is, one kind of transition metal compound (1) may be used as the component (A), or a plurality of kinds thereof may be used.

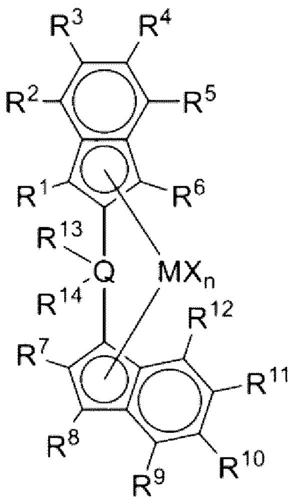

・・・ (1)

In the formula (1), M is a zirconium atom or a hafnium atom, preferably a zirconium atom.

In the formula (1), n is an integer of 1 to 4, preferably 2, selected such that the transition metal compound (1) is electrically neutral.

In the formula (1), X is each independently a hydrogen atom, a halogen atom, a hydrocarbon group having 1 to 20 carbon atoms, a silicon-containing group, an oxygen-containing group, a nitrogen-containing group, or a conjugated diene derivative group, preferably a halogen atom or a hydrocarbon group having 1 to 20 carbon atoms.

Examples of the halogen atom include fluorine, chlorine, bromine, and iodine, with chlorine being particularly preferred.

Examples of the hydrocarbon group having 1 to 20 carbon atoms include:

linear or branched alkyl groups, such as a methyl group, an ethyl group, a 1-propyl group, a 1-butyl group, a 1-pentyl group, a 1-hexyl group, a 1-heptyl group, a 1-octyl group, an iso-propyl group, a sec-butyl group (a butan-2-yl group), a tert-butyl group (a 2-methylpropan-2-yl group), an iso-butyl group (a 2-methylpropyl group), a pentan-2-yl group, a 2-methylbutyl group, an iso-pentyl group (a 3-methylbutyl group), a neopentyl group (a 2,2-dimethylpropyl group), a siamyl group (a 1,2-dimethylpropyl group), an iso-hexyl group (a 4-methylpentyl group), a 2,2-dimethylbutyl group, a 2,3-dimethylbutyl group, a 3,3-dimethylbutyl group, a thexyl group (a 2,3-dimethylbut-2-yl group), and a 4,4-dimethylpentyl group;

linear or branched alkenyl groups or unsaturated double bond-containing groups, such as a vinyl group, an allyl group, a propenyl group (a prop-1-en-1-yl group), an iso-propenyl group (a prop-1-en-2-yl group), an allenyl group (a propa-1,2-dien-1-yl group), a but-3-en-1-yl group, a crotyl group (a but-2-en-1-yl group), a but-3-en-2-yl group, a methallyl group (a 2-methylallyl group), a buta-1,3-dienyl group, a pent-4-en-1-yl group, a pent-3-en-1-yl group, a pent-2-en-1-yl group, an iso-pentenyl group (a 3-methylbut-3-en-1-yl group), a 2-methylbut-3-en-1-yl group, a pent-4-en-2-yl group, and a prenyl group (a 3-methylbut-2-en-1-yl group);

linear or branched alkynyl groups or unsaturated triple bond-containing groups, such as an ethynyl group, a prop-2-yn-1-yl group, and a propargyl group (a prop-1-yn-1-yl group);

linear or branched alkyl groups and unsaturated double bond-containing groups, those groups containing an aromatic group, such as a benzyl group, a 2-methylbenzyl group, a 4-methylbenzyl group, a 2,4,6-trimethylbenzyl group, a 3,5-dimethylbenzyl group, a cuminyl group (a 4-iso-propylbenzyl group), a 2,4,6-tri-iso-propylbenzyl group, a 4-tert-butylbenzyl group, a 3,5-di-tert-butylbenzyl group, a 1-phenylethyl group, and a benzhydryl group (a diphenylmethyl group);

cyclic saturated hydrocarbon groups, such as a cyclopropyl group, a cyclobutyl group, a cyclopentyl group, a cyclohexyl group, a cycloheptyl group, a cycloheptatrienyl group, a norbornyl group, a norbornenyl group, a 1-adamantyl group, and a 2-adamantyl group; and

aromatic substituents, such as a phenyl group, a tolyl group (a methylphenyl group), a xylyl group (a dimethylphenyl group), a mesityl group (a 2,4,6-trimethylphenyl group), a cumenyl group (an iso-propylphenyl group), a duryl group (a 2,3,5,6-tetramethylphenyl group), a 2,6-di-iso-propylphenyl group, a 2,4,6-tri-iso-propylphenyl group, a 4-tert-butylphenyl group, a 3,5-di-tert-butylphenyl group, a naphthyl group, a biphenyl group, a ter-phenyl group, a binaphthyl group, an acenaphthalenyl group, a phenanthryl group, an anthracenyl group, a pyrenyl group, and a ferrocenyl group;

and preferably a methyl group, an iso-butyl group, a neopentyl group, a siamyl group, a benzyl group, a phenyl group, a tolyl group, a xylyl group, a mesityl group, and a cumenyl group.

The hydrocarbon group having 1 to 20 carbon atoms may be a halogen-substituted hydrocarbon group in which a part or all of the hydrogen atoms of the hydrocarbon group having 1 to 20 carbon atoms are substituted with halogen atoms. Examples thereof include a fluoromethyl group, a trifluoromethyl group, a trichloromethyl group, a 2,2,2-trifluoroethyl group, a pentafluoroethyl group, a pentachloroethyl group, a pentafluorophenylmethyl group, a fluorophenyl group, a difluorophenyl group, a trifluorophenyl group, a tetrafluorophenyl group, a pentafluorophenyl group, a trifluoromethylphenyl group, and a bistrifluoromethylphenyl group, and preferably a pentafluorophenyl group.

Examples of the silicon-containing group include a trimethylsilyl group, a triethylsilyl group, a tri-iso-propylsilyl group, a diphenylmethylsilyl group, a tert-butyldimethylsilyl group, a tert-butyldiphenylsilyl group, a triphenylsilyl group, a tris(trimethylsilyl)silyl group, and a trimethylsilylmethyl group, and it is preferably a trimethylsilylmethyl group.

Examples of the oxygen-containing group include a methoxy group, an ethoxy group, a n-propoxy group, an iso-propoxy group, an allyloxy group, a n-butoxy group, a sec-butoxy group, an iso-butoxy group, a tert-butoxy group, a benzyloxy group, a methoxymethoxy group, a phenoxy group, a 2,6-dimethylphenoxy group, a 2,6-di-iso-propylphenoxy group, a 2,6-di-tert-butylphenoxy group, a 2,4,6-trimethylphenoxy group, a 2,4,6-tri-iso-propylphenoxy group, an acetoxy group, a pivaloyloxy group, a benzoyloxy group, a trifluoroacetoxy group, a perchlorate anion, and a periodate anion, and it is preferably a methoxy group, an ethoxy group, an iso-propoxy group, or a tert-butoxy group.

Examples of the nitrogen-containing group include an amino group, a cyano group, a methylamino group, a

dimethylamino group, an ethylamino group, a diethylamino group, an allylamino group, a diallylamino group, a benzylamino group, a dibenzylamino group, a pyrrolidinyl group, a piperidinyl group, a morpholyl group, a pyrrolyl group, and a bistriflylimide group.

Examples of the conjugated diene derivative group include a 1,3-butadienyl group, an isoprenyl group (a 2-methyl-1,3-butadienyl group), a piperylenyl group (a 1,3-pentadienyl group), a 2,4-hexadienyl group, a 1,4-diphenyl-1,3-pentadienyl group, and a cyclopentadienyl group, and it is preferably a 1,3-butadienyl group or a 1,3-pentadienyl group.

In the formula (1), Q is a carbon atom or a silicon atom, preferably a silicon atom.

In the formula (1), $R^1$ to $R^{14}$ are each independently a hydrogen atom, a hydrocarbon group having 1 to 20 carbon atoms, a silicon-containing group having 1 to 20 carbon atoms, an oxygen-containing group having 1 to 20 carbon atoms, or a nitrogen-containing group having 1 to 20 carbon atoms, preferably a hydrogen atom, a hydrocarbon group having 1 to 20 carbon atoms, or an oxygen-containing group having 1 to 20 carbon atoms.

Examples of the hydrocarbon group having 1 to 20 carbon atoms as $R^1$ to $R^{14}$ include:

linear or branched alkyl groups, such as a methyl group, an ethyl group, a 1-propyl group, a 1-butyl group, a 1-pentyl group, a 1-hexyl group, a 1-heptyl group, a 1-octyl group, an iso-propyl group, a sec-butyl group (a butan-2-yl group), a tert-butyl group (a 2-methylpropan-2-yl group), an iso-butyl group (a 2-methylpropyl group), a pentan-2-yl group, a 2-methylbutyl group, an iso-pentyl group (a 3-methylbutyl group), a neopentyl group (a 2,2-dimethylpropyl group), a siamyl group (a 1,2-dimethylpropyl group), an iso-hexyl group (a 4-methylpentyl group), a 2,2-dimethylbutyl group, a 2,3-dimethylbutyl group, a 3,3-dimethylbutyl group, a thexyl group (a 2,3-dimethylbut-2-yl group), and a 4,4-dimethylpentyl group;

linear or branched alkenyl groups or unsaturated double bond-containing group, such as a vinyl group, an allyl group, a propenyl group (a prop-1-en-1-yl group), an iso-propenyl group (a prop-1-en-2-yl group), an allenyl group (a propa-1,2-dien-1-yl group), a but-3-en-1-yl group, a crotyl group (a but-2-en-1-yl group), a but-3-en-2-yl group, a methallyl group (a 2-methylallyl group), a buta-1,3-dienyl group, a pent-4-en-1-yl group, a pent-3-en-1-yl group, a pent-2-en-1-yl group, an iso-pentenyl group (a 3-methylbut-3-en-1-yl group), a 2-methylbut-3-en-1-yl group, a pent-4-en-2-yl group, and a prenyl group (a 3-methylbut-2-en-1-yl group);

linear or branched alkynyl groups or unsaturated triple bond-containing groups, such as an ethynyl group, a prop-2-yn-1-yl group, and a propargyl group (a prop-1-yn-1-yl group);

linear or branched alkyl groups and unsaturated double bond-containing groups, those containing an aromatic group, such as a benzyl group, a 2-methylbenzyl group, a 4-methylbenzyl group, a 2,4,6-trimethylbenzyl group, a 3,5-dimethylbenzyl group, a cuminyl group (a 4-iso-propylbenzyl group), a 2,4,6-tri-iso-propylbenzyl group, a 4-tert-butylbenzyl group, a 3,5-di-tert-butylbenzyl group, a 1-phenylethyl group, a benzhydryl group (a diphenylmethyl group), a pentafluorophenylmethyl group;

cyclic saturated hydrocarbon groups, such as a cyclopropyl group, a cyclobutyl group, a cyclopentyl group, a cyclohexyl group, a cycloheptyl group, a cycloheptatrienyl group, a norbornyl group, a norbornenyl group, a 1-adamantyl group, and a 2-adamantyl group;

aromatic substituents, such as a phenyl group, a tolyl group (a methylphenyl group), a xylyl group (a dimethylphenyl group), a mesityl group (a 2,4,6-trimethylphenyl group), a cumenyl group (an iso-propylphenyl group), a duryl group (a 2,3,5,6-tetramethylphenyl group), a 2,6-di-iso-propylphenyl group, a 2,4,6-tri-iso-propylphenyl group, a 4-tert-butylphenyl group, a 3,5-di-tert-butylphenyl group, a naphthyl group, a biphenyl group, a ter-phenyl group, a binaphthyl group, an acenaphthalenyl group, a phenanthryl group, an anthracenyl group, a pyrenyl group, and a ferrocenyl group; and

halogen-substituted hydrocarbon groups in which a part or all of the hydrogen atoms of the hydrocarbon group having 1 to 20 carbon atoms are substituted with halogen atoms, such as a fluoromethyl group, a trifluoromethyl group, a trichloromethyl group, a 2,2,2-trifluoroethyl group, a pentafluoroethyl group, a pentachloroethyl group, a pentafluorophenylmethyl group, a fluorophenyl group, a difluorophenyl group, a trifluorophenyl group, a tetrafluorophenyl group, a pentafluorophenyl group, a trifluoromethylphenyl group, and a bistrifluoromethylphenyl group;

and preferably a methyl group, an ethyl group, a 1-propyl group, a 1-butyl group, a 1-pentyl group, a 1-hexyl group, a 1-heptyl group, a 1-octyl group, an iso-propyl group, a sec-butyl group, a tert-butyl group, an iso-butyl group, an iso-pentyl group, a neopentyl group, a tert-pentyl group, an allyl group, a cyclopropyl group, a cyclobutyl group, a cyclopentyl group, a cyclohexyl group, a cycloheptyl group, a cyclooctyl group, a cyclooctenyl group, a norbornyl group, a bicyclo[2.2.2]octan-1-yl group, a 1-adamantyl group, a 2-adamantyl group, a benzyl group, a benzhydryl group, a cumyl group, a 1,1-diphenylethyl group, a trityl group, a 2-phenylethyl group, a 3-phenylpropyl group, a cinnamyl group, a phenyl group, a tolyl group, a xylyl group, a mesityl group, a cumenyl group, a 2,6-di-iso-propylphenyl group, a 2,4,6-tri-iso-propylphenyl group, a 4-tert-butylphenyl group, a 3,5-di-tert-butylphenyl group, a 4-adamantylphenyl group, a naphthyl group, a biphenyl group, a tert-phenyl group, a binaphthyl group, a phenanthryl group, an anthracenyl group, a ferrocenyl group, and a pentafluorophenyl group.

Examples of the silicon-containing group having 1 to 20 carbon atoms as $R^1$ to $R^{14}$ preferably include a trimethylsilyl group, a triethylsilyl group, a tri-iso-propylsilyl group, a tert-butyldimethylsilyl group, a triphenylsilyl group, a cyclopentadienyldimethylsilyl group, a cyclopentadienyldiphenylsilyl group, an indenyldimethylsilyl group, a fluorenyldimethylsilyl group, a 4-trimethylsilylphenyl group, a 4-triethylsilylphenyl group, a 4-tri-iso-propylsilylphenyl group, and a 3,5-bis(trimethylsilyl)phenyl group, and examples thereof include a trimethylsilyl group, a triethylsilyl group, a tert-butyldimethylsilyl group, a 4-trimethylsilylphenyl group, a 4-triethylsilylphenyl group, a 4-tri-iso-propylsilylphenyl group, and a 3,5-bis(trimethylsilyl)phenyl group.

Examples of the oxygen-containing group having 1 to 20 carbon atoms as $R^1$ to $R^{14}$ include a methoxy group, an ethoxy group, an iso-propoxy group, an allyloxy group, a n-butoxy group, a tert-butoxy group, a prenyloxy group, a benzyloxy group, a phenoxy group, a naphthoxy group, a toluyloxy group, an iso-propylphenoxy group, an allylphenoxy group, a tert-butylphenoxy group, a methoxyphenoxy group, a biphenyloxy group, a binaphthyloxy group, an allyloxymethyl group, a benzyloxymethyl group, a phenoxymethyl group, a methoxyethyl group, a methoxyallyl group, a benzyloxyallyl group, a phenoxyallyl group, a dimethoxymethyl group, a dioxolanyl group, a tetramethyldioxolanyl group, a dioxanyl group, a dimethyldioxanyl group, a methoxyphenyl group, an iso-propoxyphenyl group, an allyloxyphenyl group, a phenoxyphenyl group, a methylenedioxyphenyl group, a 3,5-dimethyl-4-methoxyphenyl group, a 3,5-di-tert-butyl-4-methoxyphenyl group, a furyl group, a methylfuryl group, a tetrahydropyranyl group, a furfuryl group, a benzofuryl group, and a dibenzofuryl group, and it is preferably a methoxy group, an iso-propoxy group, a tert-butoxy group, an allyloxy group, a phenoxy group, a dimethoxymethyl group, a dioxolanyl group, a methoxyphenyl group, an iso-propoxyphenyl group, an allyloxyphenyl group, a phenoxyphenyl group, a 3,5-dimethyl-4-methoxyphenyl group, a 3,5-di-tert-butyl-4-methoxyphenyl group, a furyl group, a methylfuryl group, a benzofuryl group, and a dibenzofuryl group.

Examples of the nitrogen-containing group having 1 to 20 carbon atoms as $R^1$ to $R^{14}$ include an amino group, a dimethylamino group, a diethylamino group, an allylamino group, a benzylamino group, a dibenzylamino group, a pyrrolidinyl group, a piperidinyl group, a morphoryl group, a dimethylaminomethyl group, a benzylaminomethyl group, a pyrrolidinylmethyl group, a dimethylaminoethyl group, a pyrrolidinylethyl group, a dimethylaminopropyl group, a pyrrolidinylpropyl group, a dimethylaminoallyl group, a pyrrolidinylallyl group, an aminophenyl group, a dimethylaminophenyl group, a 3,5-dimethyl-4-dimethylaminophenyl group, a 3,5-di-iso-propyl-4-dimethylaminophenyl group, a julolidinyl group, a tetramethyljulolidinyl group, a pyrrolidinylphenyl group, a pyrrolylphenyl group, a carbazolylphenyl group, a di-tert-butylcarbazolylphenyl group, a pyrrolyl group, a pyridyl group, a quinolyl group, a tetrahydroquinolyl group, an iso-quinolyl group, a tetrahydro-iso-quinolyl group, an indolyl group, an indolinyl group, a carbazolyl group, a di-tert-butylcarbazolyl group, an imidazolyl group, a dimethylimidazolidinyl group, a benzimidazolyl group, an oxazolyl group, an oxazolidinyl group, and a benzoxazolyl group, and it is preferably an amino group, a dimethylamino group, a diethylamino group, a pyrrolidinyl group, a dimethylaminophenyl group, a 3,5-dimethyl-4-dimethylaminophenyl group, a 3,5-di-iso-propyl-4-dimethylaminophenyl group, a julolidinyl group, a tetramethyljulolidinyl group, a pyrrolidinylphenyl group, a pyrrolyl group, a pyridyl group, a carbazolyl group, and an imidazolyl group.

In the formula (1), adjacent substituents among $R^1$ to $R^6$ (for example, $R^1$ and $R^2$, $R^2$ and $R^3$, $R^3$ and $R^4$, $R^4$ and $R^5$, and $R^5$ and $R^6$) may be bonded to each other to form a ring that may have a substituent. The ring formed in this case is preferably a 5- to 8-membered ring that condensates to the indenyl ring moiety, may have a substituent, and consists of a saturated hydrocarbon (excluding hydrocarbon of the indenyl ring moiety) or an unsaturated hydrocarbon. When a plurality of rings is present, they may be the same as or different from each other. Although not particularly limited as long as the effects of the present invention are achieved, the ring is more preferably a 5- or 6-membered ring, and in this case, examples of the structure in which the ring and the scaffold, indenyl ring moiety, are combined include a benzindenyl ring, a tetrahydroindacene ring, and a cyclopentatetrahydronaphthalene ring, and preferably a benzindenyl ring and a tetrahydroindacene ring. These rings may have a substituent.

In the formula (1), adjacent substituents among $R^7$ to $R^{12}$ (for example, $R^7$ and $R^8$, $R^8$ and $R^9$, $R^9$ and $R^{10}$, $R^{10}$ and $R^{11}$, and $R^{11}$ and $R^{12}$) may be bonded to each other to form a ring that may have a substituent. The ring formed in this case is preferably a 5- to 8-membered ring condensates to the indenyl ring moiety, that may have a substituent and that consists of a saturated hydrocarbon (excluding the hydrocarbon of the indenyl ring moiety) or an unsaturated. When a plurality of rings is present, these may be the same as or different from each other. Not particularly limited as long as the effects of the present invention are achieved, the ring is more preferably a 5- or 6-membered ring; in this case, examples of the structure in which the ring is combined with the indenyl ring moiety as the scaffold include a benzindenyl ring, a tetrahydroindacene ring, a cyclopentatetrahydronaphthalene ring, a tetrahydrofluorene ring, and a fluorene ring. It is preferably a benzindenyl ring and a tetrahydroindacene ring. These rings may have a substituent.

In the formula (1), $R^{13}$ and $R^{14}$ may be bonded to each other to form a ring including Q, and this ring may has a substituent. The ring formed in this case preferably form a 3- to 8-membered saturated or unsaturated ring that may have a substituent. Although not particularly limited as long as the effects of the present invention are achieved, the ring is preferably a 4- to 6-membered ring. In this case, examples of the structure combined with Q include a cyclobutane ring, a cyclopentane ring, a fluorene ring, a silacyclobutane (siletane) ring, a silacyclopentane (silolane) ring, a silacyclohexane (silinane) ring, and a silafluorene ring. It is preferable that it be a cyclopentane ring, a silacyclobutane ring,

or a silacyclopentane ring. These rings optionally have a substituent.

Specific examples of the transition metal compound (1) will be shown below, but the scope of the present invention shall not be particularly limited by them.

For the sake of convenience, the ligand structure of the transition metal compound (1), excluding the moiety represented by MXn (metal moiety), is divided into the following seven: a 2-indenyl ring moiety, a 1-indenyl ring moiety, indenyl ring moiety's $R^1$, $R^6$, and $R^8$ substituents, indenyl ring moiety's $R^2$, $R^5$, $R^9$, and $R^{12}$ substituents, indenyl ring moiety's $R^3$, $R^4$, $R^{10}$, and $R^{11}$ substituents, 1-indenyl ring moiety's $R^7$ substituent, and crosslinking moiety. The abbreviation of the 2-indenyl ring moiety is $\alpha$, the abbreviation of the 1-indenyl ring moiety is $\beta$, the abbreviation of the indenyl ring moiety's $R^1$, $R^6$, and $R^8$ substituents is $\gamma$, the abbreviation of the indenyl ring moiety's $R^2$, $R^5$, $R^9$, and $R^{12}$ substituents is $\delta$, the abbreviation of the indenyl ring moiety's $R^3$, $R^4$, $R^{10}$, and $R^{11}$ substituents is $\varepsilon$, the abbreviation of the 1-indenyl ring moiety's $R^7$ substituent is $\zeta$, and the abbreviation of the crosslinking moiety structure is $\eta$. The abbreviations of the respective substituents are shown in [Table 1] to [Table 7].

[Table 1]

| 2-Indenyl ring moiety | |
|---|---|
| 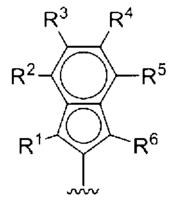 | $\alpha$ - 1 |
| 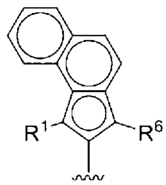 | $\alpha$ - 2 |
| 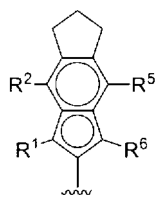 | $\alpha$ - 3 |
| 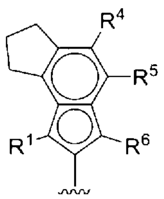 | $\alpha$ - 4 |
| 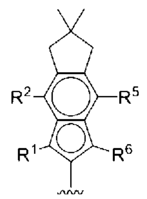 | $\alpha$ - 5 |
| 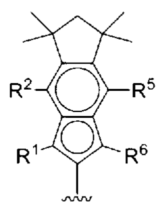 | $\alpha$ - 6 |

(continued)

| | |
|---|---|
| 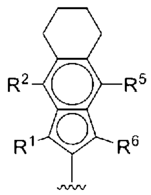 | α-7 |
| 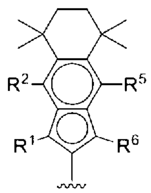 | α-8 |

[Table 2]

| 1-Indenyl ring moiety | |
|---|---|
| 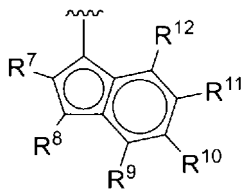 | β-1 |
| 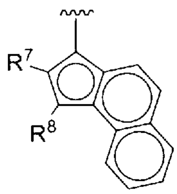 | β-2 |
| 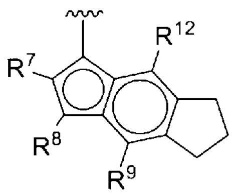 | β-3 |
| 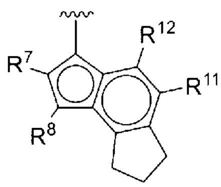 | β-4 |
| 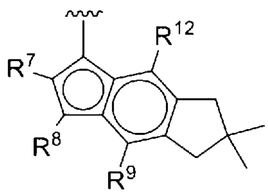 | β-5 |

(continued)

| | |
|---|---|
| 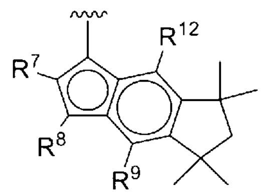 | β-6 |
| 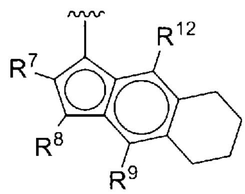 | β-7 |
| 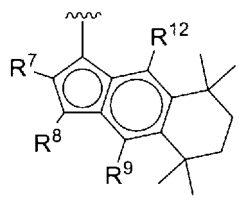 | β-8 |

The wavy lines in the above [Table 1] to [Table 2] indicate a site bonding to the crosslinking moiety.

[Table 3]

| Indenyl ring's R1, R6, and R8 substituents | |
|---|---|
| γ-1 | Hydrogen |
| γ-2 | Methyl |
| γ-3 | Ethyl |
| γ-4 | n-Propyl |
| γ-5 | Allyl |
| γ-6 | n-Butyl |
| γ-7 | But-3-en-1-yl |
| γ-8 | Benzyl |
| γ-9 | Pentafluorophenylmethyl |
| γ-10 | Phenyl |
| γ-11 | Tolyl |
| γ-12 | Naphthyl |
| γ-13 | 4-tert-Butylphenyl |
| γ-14 | 5-Mehtyl-2-furyl |
| γ-15 | 5-Methyl-2-thienyl |

The $R^1$, $R^6$, and $R^8$ substituents in [Table 3] above may be the same as or different from each other in their combinations.

[Table 4]

| Indenyl ring's R2, R5, R9, and R12 substituents | | | |
|---|---|---|---|
| δ-1 | Hydrogen | δ-30 | Anthracenyl |
| δ-2 | Methyl | δ-31 | Phenanthrenyl |
| δ-3 | Methoxy | δ-32 | 4-iso-Propylphenyl |
| δ-4 | Ethyl | δ-33 | 4-tert-Butylphenyl |
| δ-5 | Ethoxy | δ-34 | 4-Thexylphenyl |
| δ-6 | n-Propyl | δ-35 | 4-tert-Octylphenyl |
| δ-7 | iso-Propyl | δ-36 | 3,5-Di-tert-butylphenyl |
| δ-8 | Allyl | δ-37 | 4-(1-Adamantyl)phenyl |
| δ-9 | iso-Propoxy | δ-38 | 4-Trimethylsilylphenyl |
| δ-10 | n-Butyl | δ-39 | 3,5-Bis(trimethylsilyl)phenyl |
| δ-11 | iso-Butyl | δ-40 | 3,5-Di-tert-butyl-4-methoxyphenyl |
| δ-12 | sec-Butyl | δ-41 | 3,5-Di-iso-propyl-4-dimethylaminophenyl |
| δ-13 | tert-Butyl | δ-42 | Julolidinyl |
| δ-14 | But-3-en-1-yl | δ-43 | Tetramethyljulolidinyl |
| δ-15 | Neopentyl | δ-44 | 2-Furyl |
| δ-16 | Cyclopentyl | δ-45 | 5-Methyl-2-furyl |
| δ-17 | Cyclohexyl | δ-46 | 2-Benzofuryl |
| δ-18 | 2,4-Dimethylpentan-2-yl | δ-47 | 2-Thienyl |
| δ-19 | 2,4,4-Trimethylpentan-2-yl | δ-48 | 5-Methyl-2-thienyl |
| δ-20 | Benzyl | δ-49 | 2-Benzothienyl |
| δ-21 | Pentafluorophenylmethyl | δ-50 | N-Pyrrolidinyl |
| δ-22 | Phenyl | δ-51 | N-Pyrrolyl |
| δ-23 | Phenoxy | δ-52 | N-Indolyl |
| δ-24 | Tolyl | δ-53 | N-Carbazolyl |
| δ-25 | Xylyl | δ-54 | 3,6-Di-tert-butyl-carbazolyl |
| δ-26 | Mesityl | | |
| δ-27 | Anisyl | | |
| δ-28 | Naphthyl | | |
| δ-29 | Biphenyl | | |

The $R^2$, $R^5$, $R^9$, and $R^{12}$ substituents in [Table 4] above may be the same as or different from each other in their combinations.

[Table 5]

| Indenyl ring's R3, R4, R10, and R11 substituents | |
|---|---|
| ε-1 | Hydrogen |
| ε-2 | Methyl |
| ε-3 | Methoxy |
| ε-4 | Ethyl |

(continued)

| Indenyl ring's R3, R4, R10, and R11 substituents | |
|---|---|
| ε-5 | Ethoxy |
| ε-6 | n-Propyl |
| ε-7 | iso-Propyl |
| ε-8 | iso-Propoxy |
| ε-9 | n-Butyl |
| ε-10 | iso-Butyl |
| ε-11 | see-Butyl |
| ε-12 | tert-Butyl |
| ε-13 | Neopentyl |
| ε-14 | Cyclopentyl |
| ε-15 | Cyclohexyl |
| ε-16 | Thexyl |
| ε-17 | tert-Octyl |
| ε-18 | Phenoxy |

The $R^3$, $R^4$, R10, and $R^{11}$ substituents in [Table 5] above may be the same as or different from each other in their combinations.

[Table 6]

| 1-Indenyl ring's R7 substituent | |
|---|---|
| ζ-1 | Hydrogen |
| ζ-2 | Methyl |
| ζ-3 | Ethyl |
| ζ-4 | n-Propyl |
| ζ-5 | iso-Propyl |
| ζ-6 | Allyl |
| ζ-7 | Crotyl |
| ζ-8 | Metallyl |
| ζ-9 | n-Butyl |
| ζ-10 | iso-Butyl |
| ζ-11 | But-3-en-1-yl |
| ζ-12 | Neopentyl |
| ζ-13 | Cyclohexylmethyl |
| ζ-14 | 1-Adamanthylmethyl |
| ζ-15 | Benzyl |
| ζ-16 | Trimethylsilylmethyl |
| ζ-17 | Phenyl |
| ζ-18 | Tolyl |

(continued)

| 1-Indenyl ring's R7 substituent | |
|---|---|
| ζ-19 | Naphthyl |
| ζ-20 | Anisyl |
| ζ-21 | 4-tert-Butylphenyl |
| ζ-22 | 4-Trimethylsilylphenyl |
| ζ-23 | 3,5-Di-tert-butylphenyl |
| ζ-24 | 3,5-Bis(trimethylsilyl)phenyl |
| ζ-25 | 3,5-Di-tert-butyl-4-methoxyphenyl |
| ζ-26 | 3,5-Di-iso-propyl-4-dimethylaminophenyl |
| ζ-27 | Julolidinyl |
| ζ-28 | Tetramethyljulolidinyl |
| ζ-29 | 2-Furyl |
| ζ-30 | 5-Methyl-2-furyl |
| ζ-31 | 2-Thienyl |
| ζ-32 | 5-Methyl-2-thienyl |
| ζ-33 | N-Pyrrolidinyl |
| ζ-34 | N-Piperidinyl |
| ζ-35 | N-Morpholinyl |
| ζ-36 | N-Methyl-piperazinyl |
| ζ-37 | N-Pyrrolyl |
| ζ-38 | N-Indolyl |
| ζ-39 | N-Carbazolyl |

[Table 7]

| Crosslinking moiety | |
|---|---|
| η-1 | Methylene |
| η-2 | 1,1-Ethylene |
| η-3 | Benzyl (phenylmethylene) |
| η-4 | Dimethylmethylene (isopropylidene) |
| η-5 | Methylethylmethylene (sec-butylidene) |
| η-6 | Diethylmethylene (3-pentylidene) |
| η-7 | Di-n-propylmethylene (4-heptylidene) |
| η-8 | Di-n-butylmethylene (5-nonylidene) |
| η-9 | Dibenzylmethylene |
| η-10 | (Methyl)(phenyl)methylene (1-phenethylidene) |
| η-11 | (Methyl)(4-methylphenyl)methylene |
| η-12 | (Methyl)(4-methoxyphenyl)methylene |
| η-13 | Diphenylmethylene |

(continued)

| Crosslinking moiety | |
|---|---|
| η-14 | Di(4-methylphenyl)methylene |
| η-15 | Di(4-methoxyphenyl)methylene |
| η-16 | Di(4-dimethylaminophenyl)methylene |
| η-17 | 1,1-Cyclobutylene |
| η-18 | 1,1-Cyclopentylene |
| η-19 | 1,1-Cyclohexylene |
| η-20 | Dimethylsilylene |
| η-21 | Diethylsilylene |
| η-22 | Divinylsilylene |
| η-23 | Di-n-propylsilylene |
| η-24 | Di-iso-propylsilylene |
| η-25 | Diallylsilylene |
| η-26 | Di-n-butylsilylene |
| η-27 | Di-tert-butylsilylene |
| η-28 | Di-n-hexylsilylene |
| η-29 | Diphenylsilylene |
| η-30 | Di(4-methylphenyl)silylene |
| η-31 | 1,1-Silacyclobutylene (trimethylenesilylene) |
| η-32 | 1,1-Silacyclopentylene (tetramethylenesilylene) |
| η-33 | 1,1-Silacyclohexylene (pentamethylenesilylene) |
| η-34 | (Methyl)(ethyl)silylene |
| η-35 | (Methyl)(vinyl)silylene |
| η-36 | (Methyl)(allyl)silylene |
| η-37 | (Methyl)(n-hexyl)silylene |
| η-38 | (Methyl)(n-octyl)silylene |
| η-39 | (Methyl)(n-decyl)silylene |
| η-40 | (Methyl)(cyclohexyl)silylene |
| η-41 | (Methyl)(phenyl)silylene |

Specific examples of the metal moiety MXn include:

$ZrF_2$, $ZrCl_2$, $ZrBr_2$, $ZrI_2$, $Zr(Me)_2$, $Zr(Bn)_2$, $Zr(Allyl)_2$, $Zr(CH_2\text{-}tBu)_2$, Zr(1,3-butadienyl), Zr(1,3-pentadienyl), Zr(2,4-hexadienyl), Zr(1,4-diphenyl-1,3-pentadienyl), $Zr(CH_2\text{-}Si(Me)_3)_2$, $Zr(OMe)_2$, $Zr(OiPr)_2$, $Zr(NMe_2)_2$, $Zr(OMs)_2$, $Zr(OTs)_2$, and $Zr(OTf)_2$,
$HfF_2$, $HfCl_2$, $HfBr_2$, $HfI_2$, $Hf(Me)_2$, $Hf(Bn)_2$, $Hf(Allyl)_2$, $Hf(CH_2\text{-}tBu)_2$, Hf(1,3-butadienyl), Hf(1,3-pentadienyl), Hf (2, 4-hexadienyl), Hf(1,4-diphenyl-1,3-pentadienyl), $Hf(CH_2\text{-}Si(Me)_3)_2$, $Hf(OMe)_2$, $Hf(OiPr)_2$, $Hf(NMe_2)_2$, $Hf(OMs)_2$, $Hf(OTs)_2$, and $Hf(OTf)_2$. Me is a methyl group, Bn is a benzyl group, tBu is a tert-butyl group, $Si(Me)_3$ is a trimethylsilyl group, OMe is a methoxy group, OiPr is an iso-propoxy group, $NMe_2$ is a dimethylamino group, OMs is a methanesulfonate group, OTs is a p-toluenesulfonate group, and OTf is a trifluoromethanesulfonate group.

According to the above designations, a compound represented by the following formula [6] is exemplified when the 2-indenyl ring moiety is α-1 in [Table 1], the 1-indenyl ring moiety is β-5 in [Table 2], the indenyl ring moiety's $R^1$,

$R^6$, and $R^8$ substituents are γ-1 in [Table 3], the 2-indenyl ring moiety's $R^2$ and $R^5$ substituents are δ-1 in [Table 4], the 2-indenyl ring moiety's $R^3$ and $R^4$ substituents are ε-1 in [Table 5], the 1-indenyl ring moiety's $R^7$ substituent is ζ-30 in [Table 6], the 1-indenyl ring moiety's $R^9$ substituent is δ-38 in [Table 4], the 1-indenyl ring moiety's $R^{12}$ substituent is δ-3 in [Table 4], and the crosslinking moiety is η-20 in [Table 7] in combination, and the metal moiety MXn is $ZrCl_2$.

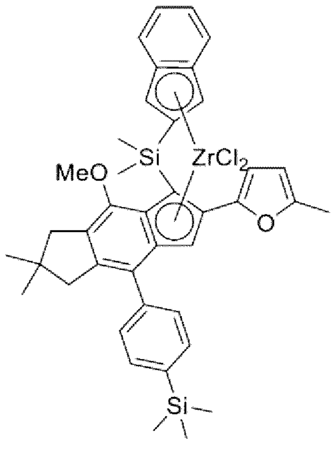

・・・[6]

Alternatively, a compound represented by the following formula [7] is exemplified when the 2-indenyl ring moiety is α-1 in [Table 1], the 1-indenyl ring moiety is β-2 in [Table 2], the indenyl ring moiety's $R^1$, $R^6$, and $R^8$ substituents are γ-1 in [Table 3], the 2-indenyl ring moiety's $R^2$ and $R^5$ substituents are δ-2 in [Table 4], the 2-indenyl ring moiety's $R^3$ and $R^4$ substituents are ε-1 in [Table 5], the 1-indenyl ring moiety's $R^7$ substituent is ζ-1 in [Table 6], and the crosslinking moiety is η-4 in [Table 7] in combination, and the metal moiety MXn is $Zr(NMe_2)_2$.

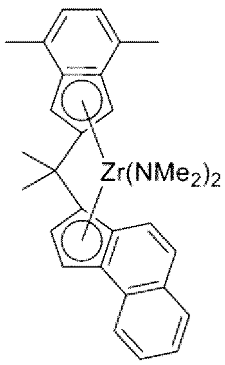

・・・[7]

Alternatively, a compound represented by the following formula [8] is exemplified when the 2-indenyl ring moiety is α-3 in [Table 1], the 1-indenyl ring moiety is β-1 in [Table 2], the 2-indenyl ring moiety's $R^1$ and $R^6$ substituents are γ-2 in [Table 3], the indenyl ring moiety's $R^2$, $R^5$, and $R^{12}$ substituents are δ-1 in [Table 4], the 1-indenyl ring moiety's $R^7$ substituent is ζ-12 in [Table 6], the 1-indenyl ring moiety's $R^8$ substituent is γ-1 in [Table 3], the 1-indenyl ring moiety's $R^9$ substituent is δ-42 in [Table 4], the 1-indenyl ring moiety's $R^{10}$ substituent is ε-3 in [Table 5], the 1-indenyl ring moiety $R^{11}$ substituent is ε-12 in [Table 5], and the crosslinking moiety is η-31 in [Table 7] in combination, and the metal moiety MXn is $HfMe_2$.

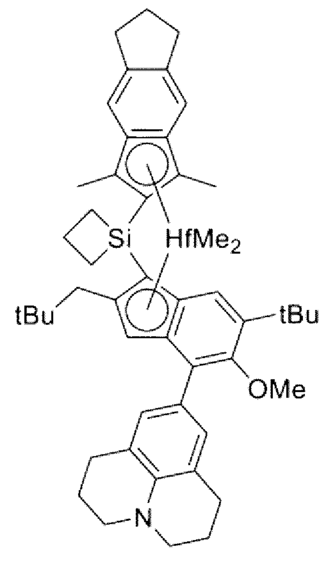

• • • [8]

Alternatively, a compound represented by the following formula [9] is exemplified when the 2-indenyl ring moiety is α-1 in [Table 1], the 1-indenyl ring moiety is β-1 in [Table 2], the 2-indenyl ring moiety's $R^1$ and $R^6$ substituents are γ-1 in [Table 3], the 2-indenyl ring moiety's $R^2$ substituent is δ-7 in [Table 4], the 2-indenyl ring moiety's $R^3$, $R^4$, $R^{10}$, and $R^{11}$ substituents are ε-1 in [Table 5], the 2-indenyl ring moiety's $R^5$ substituent is δ-2 in [Table 4], the 1-indenyl ring moiety's $R^7$ substituent is ζ-1 in [Table 6], the 1-indenyl ring moiety's $R^8$ substituent is γ-9 in [Table 3], the 1-indenyl ring moiety's $R^9$ and $R^{12}$ substituents are δ-1 in [Table 4], and the crosslinking moiety is η-29 in [Table 7], in combination and the metal moiety MXn is Zr(1,3-pentadienyl).

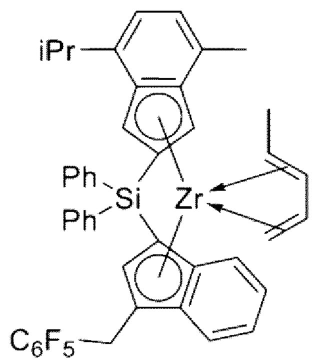

• • • [9]

The transition metal compound (1) can be produced by conventionally known methods, and the production method is not particularly limited.

A substituted indene compound as the starting material can be produced by known methods, and the production method thereof is not particularly limited. Examples of the known production methods include production methods disclosed in "Organometallics 1994, 13, 954.", "Organometallics 2006, 25, 1217.", patent literature JP 2006-509059A, "Bioorg. Med. Chem. 2008, 16, 7399.", patent literature WO 2009/080216, "Organometallics 2011, 30, 5744.", patent literature JP 2011-500800A, "Organometallics 2012, 31, 4962.", "Chem. Eur. J. 2012, 18, 4174.", patent literature JP 2012-012307A, JP 2012-121882A, JP 2014-196319A, JP 2014-513735A, JP 2015-063495A, JP 2016-501952A, and JP 2019-059933A,for example.

Examples of the known methods for producing the transition metal compound (1) and precursor compounds (ligands) include "Macromolecules 2001, 34, 2072.", "Macromolecules 2003, 36, 9325.", "Organometallics 2004, 23, 5332.", "Eur. J. Inorg. Chem. 2005, 1003.", and "Eur. J. Inorg. Chem. 2009, 1759.".

In the transition metal compound (1), planes of the indenyl ring moieties, which interpose the crosslinking moiety therebetween and connect to the center metal, are present in two directions (a front plane and a back plane). Therefore, when no plane of symmetry is present in the 2-indenyl ring moiety, two structural isomers represented by the following general formula [10a] or [10b] are present by way of an example.

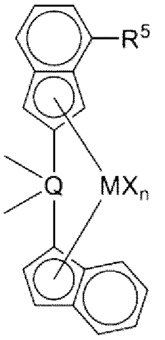
· · · [10a]

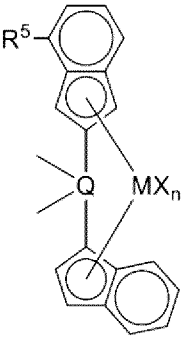
· · · [10b]

Likewise, also when the substituents $R^{13}$ and $R^{14}$ of the crosslinking moiety are not the same, two structural isomers represented by the following general formula [11a] or [11b] are present by way of an example.

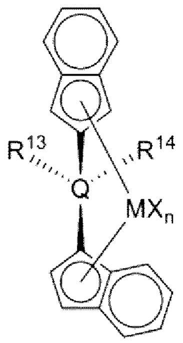
· · · [11a]

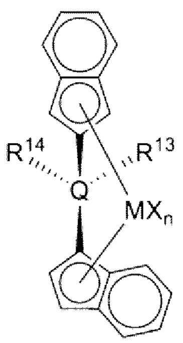
· · · [11b]

Purification and fractionation of a mixture of these structural isomers, or selective production of structural isomers, can be done by known methods, and the production method is not particularly limited. Examples of the known production methods include, in addition to those listed above as the methods for producing the transition metal compound (1), the production methods disclosed in patent literature JP H10-109996A, "Organometallics 1999, 18, 5347.", "Organometallics 2012, 31, 4340.", patent literature JP 2011-502192A, and other documents.

Within the range of the transition metal compound (1), one kind of transition metal compound may be used alone, two or more kinds may be used in combination, a mixture of structural isomers may be used, one kind of structural isomer may be used alone, or a mixture of two or more kinds of structural isomers may be used. As described above, according to the present invention, an ethylene polymer in which many long chain branches are introduced can be produced with high catalytic activity by using only the transition metal compound (1) as the transition metal compound that constitutes the catalyst for olefin polymerization. However, to the extent that this effect is not impaired, one or more transition metal compounds other than the transition metal compound (1) may be used in combination as the transition metal compound. In this case, the transition metal compound (1) may be in any of the forms described above.

<Solid support (S)>

The solid support (S) contained in the catalyst for olefin polymerization (X) is an inorganic or organic compound and is a granular or fine particulate solid.

Examples of the inorganic compound used as the solid support (S) include a porous oxide, a solid aluminoxane compound, an inorganic chloride, a clay, a clay mineral, or an ion exchangeable layered compound.

The porous oxide used are, for example, $SiO_2$, $Al_2O_3$, MgO, ZrO, TiCt, $B_2O_3$, CaO, ZnO, BaO, and ThCt, or a composite or a mixture including such an oxide, specifically, natural or synthetic zeolite, $SiO_2$-MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO, for example. Of these, one mainly containing $SiO_2$ is preferred.

The porous oxide may contain a small amount of a carbonate, a sulfate, a nitrate, or an oxide component, such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$, or $Li_2O$.

Such porous oxide differs in properties depending on the type and the production method, and the solid support (S) preferably has a particle size of usually 0.2 to 300 um, preferably 1 to 200 um, a specific surface area in the range of usually 50 to 1200 $m^2/g$, preferably 100 to 1000 $m^2/g$, and a pore volume in the range of usually 0.3 to 30 $cm^3/g$. Such a support is, if necessary, calcined at 100 to 1000°C, preferably 150 to 700°C, for example, and then used.

Examples of the solid aluminoxane compound include an aluminoxane with a structure represented by the following general formula (S-a), an aluminoxane with a structure represented by the following general formula (S-b), and an aluminoxane having, as the structure, a repeating unit represented by the following general formula (S-c) and a repeating unit represented by the following general formula (S-d) .

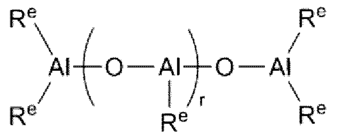 • • • (S − a) 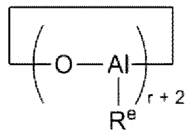 • • • (S − b)

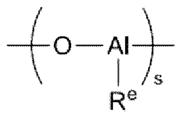 • • • (S − c) 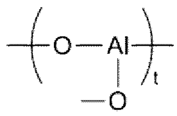 • • • (S − d)

In the above formulas (S-a) to (S-d), $R^e$ is each independently a hydrocarbon group having 1 to 10, preferably 1 to 4, carbon atoms. Specific examples thereof include hydrocarbon groups, such as a methyl group, an ethyl group, a propyl group, an isopropyl group, an isopropenyl group, a n-butyl group, a sec-butyl group, a tert-butyl group, a pentyl group, a hexyl group, an octyl group, a decyl group, a dodecyl group, a tridecyl group, a tetradecyl group, a hexadecyl group, an octadecyl group, an eicosyl group, a cyclohexyl group, a cyclooctyl group, a phenyl group, a tolyl group, and an ethylphenyl group, with a methyl group, an ethyl group, and an isobutyl group being preferred, and a methyl group being particularly preferred. Also, part of $R^e$ may be substituted with a halogen atoms such as chlorine or bromine, and the halogen content may be 40% by weight or less based on $R^e$. Straight lines in the formulas (S-c) and (S-d) whose one end is not connected to an atom indicate binding to another atom not shown.

In the above formulas (S-a) and (S-b), r represents an integer of 2 to 500, preferably 6 to 300, and particularly preferably 10 to 100. In the above formulas (S-c) and (S-d), s and t each represent an integer of 1 or more. r, s, and t are selected such that the aluminoxane can substantially maintain a solid state under the reaction environment in which it is used.

The solid aluminoxane compound differs from conventionally known supports for olefin polymerization catalysts in that it does not contain inorganic solid components such as silica or alumina, nor organic polymer components such as polyethylene or polystyrene, and is solidified with an alkylaluminum compound being its main component. The term "solid" means that the aluminoxane component substantially maintains a solid state under the reaction environment in which the aluminoxane is used. More specifically, it means that, as will be described later, when bringing the component (A) into contact with the aluminoxane component to prepare a catalyst for olefin polymerization (e.g., a catalyst for ethylene polymerization), and when using the prepared catalyst for olefin polymerization to carry out polymerization (e.g., suspension polymerization) of an olefin (e.g., ethylene), the aluminoxane component maintains a substantially solid state.

The most convenient method to confirm whether the aluminoxane component is in a solid state is to visually confirm it, but it is often difficult to visually confirm it at the time of polymerization, for example. In such cases, it is possible to determine, for example, from the properties of the polymer powder obtained after polymerization and the state of attachment to the reactor. Conversely, in the case where the properties of the polymer powder are good and attachment to the reactor is small, even if part of the aluminoxane component leaches out to some extent under the polymerization environment, this does not depart from the spirit of the present invention. Although examples of the index for determining the properties of the polymer powder include bulk density, particle shape, surface shape, and abundance of amorphous polymer, the polymer bulk density is preferred from the viewpoint of quantifiability. The bulk density is usually within the range of 0.01 to 0.9, preferably 0.05 to 0.6, and more preferably 0.1 to 0.5.

The dissolution proportion of the solid aluminoxane compound in n-hexane held at a temperature of 25°C is usually in the range of 0 to 40 mol%, preferably 0 to 20 mol%, and particularly preferably 0 to 10 mol%.

The dissolution proportion is determined by adding 2 g of a solid aluminoxane compound support to 50 ml of n-hexane held at 25°C, then carrying out stirring for 2 hours, subsequently separating the solution part using a G-4 glass filter, and measuring the aluminum concentration in this filtrate. Accordingly, the dissolution proportion is determined as the proportion of aluminum atoms present in the filtrate to the amount of aluminum atoms corresponding to 2 g of the aluminoxane used.

As the solid aluminoxane compound, known solid aluminoxanes can be used with no restriction, and for example, the solid polyaluminoxane composition described in patent literature WO 2014/123212 can be used as well. Examples of the known production methods include the production methods described in patent literature JP H07-042301B, JP H06-220126A, JP H06-220128A, JP H11-140113A, JP H11-310607A, JP 2000-38410A, JP 2000-95810A, and WO

2010/55652.

The average particle size of the solid aluminoxane compound is generally in the range of 0.01 to 50000 um, preferably 0.1 to 1000 um, and particularly preferably 1 to 200 um. The average particle size of the solid aluminoxane compound is determined by observing particles with a scanning electron microscope, measuring the particle size of 100 or more particles, and weight averaging the sizes. First, the particle size d of each particle is determined by sandwiching the particle image with two parallel lines in each of the horizontal direction and the vertical direction, measuring the length therebetween, and using the equation:

$$\text{particle size } d = ((\text{length in horizontal direction})^2 + (\text{length in vertical direction})^2)^{0.5}.$$

Next, the weight average particle size of the solid aluminoxane compound is determined by the equation, using the particle size d determined as described above and the number of particles n.

$$\text{Average particle size} = \Sigma nd^4/\Sigma nd^3$$

It is preferred that the solid aluminoxane compound has a specific surface area of 50 to 1000 $m^2/g$, preferably 100 to 800 $m^2/g$, and a pore volume of 0.1 to 2.5 $cm^3/g$.

Examples of the inorganic halide include $MgCl_2$, $MgBr_2$, $MnCl_2$, and $MnBr_2$. The inorganic halide may be used as it is, or may be used after being crushed with a ball mill or a vibrating mill. Further, the inorganic halide may be used after being dissolved in solvents such as alcohols and precipitated as fine particles with a precipitating agent.

The clay usually include a clay mineral as main component. The ion-exchangeable layered compound is a compound having a crystal structure in which planes formed by, for example, ionic bonds are mutually stacked in parallel by a weak bond strength, and in which ions contained therein are exchangeable. Most clay mineral is the ion exchangeable layered compound. Such a clay, a clay mineral, and an ion exchangeable layered compound here used are not limited to natural products, and can also be artificially synthesized products.

Examples of the clay, clay mineral, or ion exchangeable layered compound may include a clay, a clay mineral, and an ionic crystalline compound having a layered crystal structure, such as a hexagonal closest packing type, an antimony type, a $CdCl_2$ type, and a $CdI_2$ type.

Examples of the clay and the clay mineral include kaolin, bentonite, kibushi clay, gairome clay, allophane, hisingerite, pyrophyllite, micas, montmorillonites, vermiculite, chlorites, palygorskite, kaolinite, nacrite, dickite, and halloysite. Examples of the ion exchangeable layered compound include a crystalline acidic salt of a polyvalent metal, such as $\alpha$-$Zr(HAsO_4)_2 \cdot H_2O$, $\alpha$-$Zr(HPO_4)_2$, $\alpha$-$Zr(KPO_4)_2 \cdot 3H_2O$, $\alpha$-$Ti(HPO_4)_2$, $\alpha$-$Ti(HAsO_4)_2 \cdot H_2O$, $\alpha$-$Sn(HPO_4)_2 \cdot H_2O$, $\gamma$-$Zr(HPO_4)_2$, $\gamma$-$Ti(HPO_4)_2$, and $\gamma$-$Ti(NH_4PO_4)_2 \cdot H_2O$.

Such a clay, a clay mineral, or an ion exchangeable layered compound is preferably one having a volume of pores of 0.1 cc/g or more, and particularly preferably 0.3 to 5 cc/g as measured by the mercury porosimetry, the pores having a radius of 20 Å or more. The volume of pores is measured by the mercury porosimetry using a mercury porosimeter for the pore radius in the range of 20 to $3 \times 10^4$ Å. When one having a volume of pores with a radius of 20 Å or more is smaller than 0.1 cc/g is used as the support, it tends to be difficult to obtain high polymerization activity.

It is also preferable to subject the clay and the clay mineral to chemical treatment. The chemical treatment to be used can be any treatment such as surface treatment for removing impurities attached to the surface, or treatment that affects the crystal structure of the clay. Specific examples of the chemical treatment include acid treatment, alkali treatment, salt treatment, and organic substance treatment. The acid treatment not only removes impurities on the surface, but also increases the surface area by leaching out cations such as Al, Fe, and Mg from the crystal structure. The alkali treatment destroys the crystal structure of the clay, resulting in a change in the structure of the clay. In addition, the salt treatment and the organic substance treatment can form an ionic composite, a molecular composite, an organic derivative, or other forms, which alter the surface area and the interlayer distance.

The ion exchangeable layered compound may be a layered compound in which the space between layers is enlarged by exchanging an exchangeable ion in the space between layers with another large and bulky ion by means of ion exchangeability. Such a bulky ion serves as a shore supporting the layered structure, and is usually referred to as a pillar. In addition, such introduction of another substance into the space between layers in the layered compound is referred to as intercalation. Examples of a guest compound to be intercalated include a cationic inorganic compound such as $TiCl_4$ and $ZrCl_4$, a metal alkoxide such as $Ti(OR)_4$, $Zr(OR)_4$, $PO(OR)_3$, and $B(OR)_3$, wherein R represents, for example, a hydrocarbon group, and a metal hydroxide ion such as $[Al_{13}O_4(OH)_{24}]^{7+}$, $[Zr_4(OH)_{14}]^{2+}$, and $[Fe_3O(OCOCH_3)_6]^+$. These compounds are used alone, or in combination of two or more kinds thereof. When intercalating

these compounds, it is also possible to allow, for example, a polymerized product obtained by hydrolysis of a metal alkoxide such as $Si(OR)_4$, $Al(OR)_3$, or $Ge(OR)_4$, wherein R represents, for example, a hydrocarbon group, a colloidal inorganic compound such as $SiO_2$, or the like can also coexist. In addition, examples of the pillar include an oxide produced by intercalation of the above metal hydroxide ion into the space between layers and subsequent thermal dehydration.

The clay, the clay mineral, and the ion exchangeable layered compound may be used as they are, or they may be used after carrying out treatment such as ball milling or sieving. They may also be used after newly adding water for adsorption or after thermal dehydration treatment. Furthermore, one kind may be used alone, or two or more kinds may be used in combination.

Examples of the organic compound used as the solid support (S) include a granular or fine particulate solid with a particle size in the range of 10 to 300 pm. Specific examples of the organic compound include a granular or fine particulate solid including a polymer produced using an olefin having 2 to 14 carbon atoms such as ethylene, propylene, 1-butene, or 4-methyl-1-pentene, a polymer or reaction product produced using vinylcyclohexane, styrene, or divinylbenzene as a main component, or modified products thereof.

The solid support (S) is preferably a porous oxide from the viewpoint of reducing foreign substances during forming.

<Component (C)>

The catalyst for olefin polymerization (X) may preferably further contain a component (C), and the component (C) is at least one compound selected from the group consisting of an organometallic compound (c-1) represented by the following general formulas (3) to (5), an organoaluminum oxy compound (c-2), and a compound (c-3) that reacts with the component (A) to form an ion pair.

$$R^a_mAl(OR^b)_nH_pX_q \ldots \qquad (3)$$

In the formula (3), $R^a$ and $R^b$ each independently represent a hydrocarbon group having 1 to 15 carbon atoms; X represents a halogen atom; m is a number of $0 < m \leq 3$; n is a number of $0 \leq n < 3$; p is a number of $0 \leq p < 3$; q is a number of $0 \leq q < 3$; and $m + n + p + q = 3$ is satisfied.

$$M^aAlR^a_4 \ldots \qquad (4)$$

In the formula (4), $M^a$ represents Li, Na, or K; and $R^a$ represents a hydrocarbon group having 1 or more and 15 or less carbon atoms.

$$R^a_rM^bR^b_sX_t \ldots \qquad (5)$$

In the formula (5), $R^a$ and $R^b$ each independently represent a hydrocarbon group having 1 or more and 15 or less carbon atoms; $M^b$ is selected from Mg, Zn, and Cd; X represents a halogen atom; r is $0 < r \leq 2$; s is $0 \leq s \leq 1$; t is $0 \leq t \leq 1$; and $r + s + t = 2$ is satisfied.

Among the organometallic compound (c-1), one represented by the formula (3) is preferred, and specific examples thereof include:

trialkylaluminums such as trimethylaluminum, triethylaluminum, triisopropylaluminum, triisobutylaluminum, trihexylaluminum, trioctylaluminum, and tri-2-ethylhexylaluminum;
dialkylaluminum halides such as dimethylaluminum chloride, diethylaluminum chloride, diisopropylaluminum chloride, diisobutylaluminum chloride, and dimethylaluminum bromide;
alkylaluminum sesquihalides such as methylaluminum sesquichloride, ethylaluminum sesquichloride, isopropylaluminum sesquichloride, butylaluminum sesquichloride, and ethylaluminum sesquibromide;
alkylaluminum dihalides such as methylaluminum dichloride, ethylaluminum dichloride, isopropylaluminum dichloride, and ethylaluminum dibromide;
alkylaluminum hydrides such as dimethylaluminum hydride, diethylaluminum hydride, dihydrophenylaluminum hydride, diisopropylaluminum hydride, di-n-butylaluminum hydride, diisobutylaluminum hydride, diisohexylaluminum hydride, diphenylaluminum hydride, dicyclohexylaluminum hydride, di-sec-heptylaluminum hydride, and di-sec-nonylaluminum hydride; and
dialkylaluminum alkoxides such as dimethylaluminum ethoxide, diethylaluminum ethoxide, diisopropylaluminum methoxide, and diisobutylaluminum ethoxide.

Examples of the formula (4) include lithium aluminum hydride, and examples of the formula (5) include the dialkylzinc compounds described in patent literature JP 2003-171412A, for example, and these may be used in combination with a phenolic compound, for example.
The organoaluminum oxy compound (c-2) is preferably an organoaluminum oxy compound prepared from a trialkylaluminum or a tricycloalkylaluminum, and particularly preferably an aluminoxane prepared from trimethylaluminum or triisobutylaluminum, such as methylaluminoxane. Such organoaluminum oxy compounds may be used alone as one kind, or two or more kinds are used in combination.
As the compound (c-3) that reacts with the component (A) to form an ion pair, Lewis acids, ionic compounds, borane compounds, and carborane compounds described in, for example, patent literature JP H01-501950A, JP H10-502036A, JP H03-179005A, JP H03-179006A, JP H03-207703A, JP H03-207704A, US 5321106B, and further heteropoly compounds and isopoly compounds can be used.
When the organoaluminum oxy compound such as methylaluminoxane is used as a co-catalyst component in combination, not only the catalyst for olefin polymerization (X) exhibits very high polymerization activity on olefin compounds, but also a solid support component containing the co-catalyst component can be easily prepared as a result of a reaction with active hydrogen in the solid support. Therefore, the component (C) preferably contains at least the organoaluminum oxy compound (c-2).

<Method for using each component and order of addition>

The catalyst for olefin polymerization (X) can be prepared by mixing the component (A) and the component (S), and optionally the component (C), in an inert hydrocarbon and bringing them into contact with each other.
Focusing on the order of contact, examples of the method of bringing each component into contact include:

(i) a method of bringing the component (S) into contact with the component (A);
(ii) a method of bringing the component (S) into contact with the component (C) and then bringing the component (A) into contact therewith;
(iii) a method of bringing the component (A) into contact with the component (C) and then bringing the component (S) into contact therewith;
(iv) a method of bringing the component (S) into contact with the component (C), and then bringing a mixture of the component (A) and the component (C) into contact therewith; and
(v) a method of bringing the component (S) into contact with the component (C), further bringing the component (C) into contact therewith, and then bringing a mixture of the component (A) and the component (C) into contact therewith. When a plurality of kinds of the component (C) is used, the component (C) may be the same as or different from each other. Among the above methods, (i), (ii) and (iii) are preferred.

In each of the above methods in which the contact order form is shown, in the step involving contact between the component (S) and the component (C) and the step involving contact between the component (S) and the component (A), fouling during the polymerization reaction is reduced or the properties of particles of the produced polymer are improved by the coexistence of a component (G). As the component (G), a compound having a polar functional group can be used. A non-ionic surfactant is preferred, and a polyalkylene oxide block, a higher aliphatic amide, a polyalkylene oxide, a polyalkylene oxide alkyl ether, an alkyl diethanolamine, a polyoxyalkylene alkylamine, a glycerol fatty acid ester, and a N-acylamino acid are more preferred. One kind of these may be used, or two or more kinds may be used in combination.
Examples of the solvent used for preparation of the catalyst for olefin polymerization (X) include an inert hydrocarbon solvent, and specific examples thereof may include an aliphatic hydrocarbon such as propane, butane, pentane, hexane, heptane, octane, decane, dodecane, and kerosene; an alicyclic hydrocarbon such as cyclopentane, cyclohexane, and methylcyclopentane; an aromatic hydrocarbon such as benzene, toluene, and xylene; a halogenated hydrocarbon such as ethylene chloride, chlorobenzene, and dichloromethan; or mixtures thereof.
In the contact between the component (C) and the component (S), the reaction site in the component (C) and the reaction site in the component (S) react with each other to be chemically bonded, forming a contact product of the component (C) and the component (S). The contact time between the component (C) and the component (S) is usually 1 minute to 20 hours, preferably 30 minutes to 10 hours, and the contact temperature is usually -50 to 200°C, preferably - 20 to 120°C. If the initial contact between the component (C) and the component (S) is carried out rapidly, the component (S) is collapsed due to the reaction heat exotherm and reaction energy, and the morphology of the resulting solid catalyst component is deteriorated. In the case where this is used for polymerization, continuous operation is often difficult due to the poor polymer morphology. Therefore, in the initial contact between the component (C) and the component (S), it is preferable to bring them into contact at a lower temperature to reduce the reaction heat exotherm, or to control the reaction heat exotherm and allow them to react at a rate that can maintain the initial contact temperature. The same

applies to the case where the contact between the component (C) and the component (S) is made, and the component (C) is further brought into contact therewith. The contact weight ratio of the component (C) and the component (S) (weight of the component (C)/weight of the component (S)) can be selected arbitrarily, but a higher contact weight ratio allows more of the component (A) to be brought into contact and improves the catalytic activity per weight of the solid catalyst component.

The contact weight ratio of the component (C) to the component (S) [= weight of the component (C)/weight of the component (S)] is preferably 0.05 to 3.0, particularly preferably 0.1 to 2.0.

When the component (A) and the contact product of the component (C) and the component (S) are brought into contact with each other, the contact time is usually 1 minute to 20 hours, preferably 1 minute to 10 hours, and the contact temperature is usually within the range of -50 to 200°C, preferably -50 to 100°C.

The component (C-1) is used in an amount such that the molar ratio [(C-1)/M] of the component (C-1) to all the transition metal atoms (M) in the component (A) is usually 0.01 to 100,000, preferably 0.05 to 50,000.

The component (C-2) is used in an amount such that the molar ratio [(C-2)/M] of the component (C-2) (in terms of aluminum atoms) to all the transition metal atoms (M) in the component (A) is usually 10 to 500,000, preferably 20 to 100,000.

The component (C-3) is used in an amount such that the molar ratio [(C-3)/M] of the component (C-3) to all the transition metal atoms (M) in the component (A) is usually 1 to 10, preferably 1 to 5.

The ratio of the component (C) to all the transition metal atoms (M) in the component (A) can be determined by inductively coupled plasma atomic emission spectrometry (ICP analysis method). For ethylene polymerization, the catalyst for olefin polymerization (X) may be used as it is, and this catalyst for olefin polymerization may also be used after polymerizing thereonto an olefin to form a prepolymerized catalyst (XP).

The prepolymerized catalyst (XP) can be prepared by prepolymerizing ethylene, for example, in the presence of the catalyst for olefin polymerization (X), usually in an inert hydrocarbon solvent. The preparation can be performed by any method of batchwise, semi-continuous, or continuous methods, and can also be performed under reduced pressure, normal pressure, or pressurization. Further, desirably, the prepolymerized catalyst (XP) is produced in an amount of 0.01 to 1000 g, preferably 0.1 to 800 g, more preferably 0.2 to 500 g per 1 g of the solid catalyst component, by prepolymerization.

The prepolymerized catalyst (XP) produced in the inert hydrocarbon solvent may be separated from the suspension and then suspended again in an inert hydrocarbon, and ethylene may be introduced into the thus obtained suspension. Alternatively the prepolymerized catalyst (XP) produced in the inert hydrocarbon solvent may be dried, and then ethylene may be introduced.

The prepolymerization temperature is -20 to 80°C, preferably 0 to 60°C, and the prepolymerization time is 0.5 to 100 hours, preferably about 1 to 50 hours. An olefin preferably including ethylene as the main component is used for the prepolymerization.

As for the form of the solid catalyst component used for prepolymerization, those already mentioned can be utilized with no restriction. In addition, the component (C) is used if necessary, and the organometallic compound (c-1) represented by the above formula (3) is preferably used. When the component (C) is used, the component (C) is used in an amount such that the molar ratio (Al/M) of aluminum atoms (Al) in the component (C) to the transition metal atom (M) in the component (A) is 0.1 to 10000, preferably 0.5 to 5000.

It is desirable that the concentration of the catalyst for olefin polymerization (X) in the prepolymerization system be usually 1 to 1000 grams/liter, and even 10 to 500 grams/liter, as the catalyst for olefin polymerization/polymerization volume ratio. At the time of prepolymerization, the aforementioned component (G) may be allowed to coexist to reduce fouling or improve particle properties.

In addition, for the purpose of improving the flowability of the prepolymerized catalyst (XP) and reducing the occurrence of a heat spot, a sheeting or a polymer lump during the polymerization, the prepolymerized catalyst (XP), once produced by prepolymerization, may be brought into contact with the component (G).

The temperature when bringing the component (G) into contact is usually -50 to 50°C, preferably -20 to 50°C, and the contact time is usually 1 minute to 20 hours, preferably 5 minutes to 10 hours.

When bringing the catalyst for olefin polymerization (X) and the component (G) into contact with each other, the component (G) is used in an amount of 0.1 to 20 parts by weight, preferably 0.3 to 10 parts by weight, and more preferably 0.4 to 5 parts by weight, relative to 100 parts by weight of the catalyst for olefin polymerization (X).

The mixing and contacting of the catalyst for olefin polymerization (X) and the component (G) can be carried out in an inert hydrocarbon solvent, and examples of the inert hydrocarbon solvent include those that are the same as described above.

In the method for producing the ethylene polymer according to the present invention, one obtained by drying the prepolymerized catalyst (XP) (hereinafter, also referred to as the "dried prepolymerized catalyst") can be used as the catalyst for olefin polymerization (X). Drying of the prepolymerized catalyst (XP) is usually carried out after removing the dispersion medium hydrocarbon from the obtained suspension of the prepolymerized catalyst by filtration, for example.

Drying of the prepolymerized catalyst (XP) is carried out by maintaining the prepolymerized catalyst (XP) at a temperature of 70°C or lower, preferably in the range of 20 to 50°C, under the flow of an inert gas. It is desirable that the amount of volatile components in the obtained dried prepolymerized catalyst be 2.0% by weight or less, preferably 1.0% by weight or less. The lower the amount of the volatile component in the dried prepolymerized catalyst, the better, with no particular lower limit, but it is practically 0.001% by weight. Although depending on the drying temperature, the drying time is usually 1 to 48 hours.

The dried prepolymerized catalyst is excellent in flowability, and therefore, it can be stably supplied to the polymerization reactor. In addition, when the dried prepolymerized catalyst is used, accompaniment of the solvent used for suspension into the vapor phase polymerization system is avoided, thus polymerization can be stably performed.

[Method for producing ethylene polymer]

Next, the method for producing the ethylene polymer according to the present invention will be described. The ethylene polymer is obtained by polymerization (homopolymerization or copolymerization) of ethylene in the presence of the above-mentioned catalyst for olefin polymerization (X). By using the catalyst for olefin polymerization (X), a low density ethylene copolymer can be efficiently produced that has high polymerization activity, is excellent in forming processability and mechanical strength, and has numerous long chain branches. The ethylene polymer of the present invention refers to one in which the ethylene content in the polymer is 10 mol% or more.

In the present invention, the polymerization can be performed either by a liquid phase polymerization method such as dissolution polymerization or suspension polymerization, or bya vapor phase polymerization method. In the suspension polymerization method and the vapor phase polymerization method, the prepolymerized catalyst (XP) is preferably used.

Specific examples of the inert hydrocarbon medium used in the liquid phase polymerization method include an aliphatic hydrocarbon such as propane, butane, pentane, hexane, heptane, octane, decane, dodecane, and kerosene; an alicyclic hydrocarbon such as cyclopentane, cyclohexane, and methylcyclopentane; an aromatic hydrocarbon such as benzene, toluene, and xylene; a halogenated hydrocarbon such as ethylene chloride, chlorobenzene, and dichloromethan; and mixtures thereof. Alternatively, in the liquid phase polymerization method, the olefin itself can be used as the solvent.

When using the above catalyst for olefin polymerization to carry out polymerization of ethylene, the component (A) is used in an amount so as to be usually $1 \times 10^{-12}$ to $1 \times 10^{-1}$ moles, preferably $1 \times 10^{-8}$ to $1 \times 10^{-2}$ moles, per 1 liter of the reaction volume. In addition, the component (c) is used, and in particular, the organoaluminum compound represented by the formula (3) in (c-1) is preferably used.

Also, the temperature for polymerization for ethylene using the prepolymerized catalyst (XP) is usually in the range of -50 to +200°C, preferably 0 to 170°C, and particularly preferably 60 to 170°C. The polymerization pressure is usually under conditions of normal pressure to 100 $kgf/cm^2$, preferably normal pressure to 50 $kgf/cm^2$. The polymerization reaction can be carried out in any of the batchwise, semi-continuous, and continuous methods. Furthermore, the polymerization can also be carried out at two or more divided stages with different reaction conditions.

The molecular weight of the resulting polymer can be regulated by allowing the presence of hydrogen in the polymerization system or by changing the polymerization temperature. In general, the more low molecular weight components there are, the more attachment to the polymerization reactor wall and stirring blade, which can lead to a decrease in productivity due to the load on the cleaning step. At the time of polymerization, the component (G) can be allowed to coexist to reduce fouling or improve particle properties.

In addition, the monomer supplied together with ethylene for the copolymerization reaction in the present invention is one or more monomers selected from $\alpha$-olefins having 4 to 10 carbon atoms, preferably $\alpha$-olefins having 6 to 10 carbon atoms. Specific examples of the $\alpha$-olefins having 4 to 10 carbon atoms include propylene, 1-butene, 1-pentene, 1-hexene, 4-methyl-1-pentene, 1-octene, and 1-decene. Also, a monomer other than ethylene and $\alpha$-olefins having 4 to 10 carbon atoms may supplied to the extent that the effects of the present invention are not impaired, or may not be supplied.

[Thermoplastic resin composition (Y) and others]

By blending the ethylene-$\alpha$-olefin copolymer (A) according to the present invention with a thermoplastic resin other than the ethylene-$\alpha$-olefin copolymer (A) according to the present invention (hereinafter, referred to as the "additional thermoplastic resin (RY)"), a thermoplastic resin composition (Y), which is excellent in formability and is also excellent in mechanical strength, is obtained. The blend ratio of the ethylene-$\alpha$-olefin copolymer (A) of the present invention to the additional thermoplastic resin (RY) (mass of the ethylene-$\alpha$-olefin copolymer (A)/mass of the additional thermoplastic resin (RY)) is usually 99.9/0.1 to 0.1/99.9.

As the additional thermoplastic resin (RY), a crystalline thermoplastic resin such as polyolefin, polyamide,

polyester, and polyacetal; or a non-crystalline thermoplastic resin such as polystyrene, acrylonitrile-butadiene-styrene copolymer (ABS), polycarbonate, polyphenylene oxide, and polyacrylate is used. Polyvinyl chloride is also preferably used.

Specific examples of the above polyolefin include an ethylene polymer, a propylene polymer, a butene polymer, a 4-methyl-1-pentene polymer, a 3-methyl-1-butene polymer, and a hexene polymer. Among them, an ethylene polymer, a propylene polymer, and a 4-methyl-1-pentene polymer are preferred. In the case where the above polyolefin is an ethylene polymer, it may be a conventional ethylene polymer or an ethylene-polar group-containing vinyl copolymer, but a conventional ethylene polymer is more preferred. The ethylene polymer and the propylene polymer may be an ethylene polymer and a propylene polymer including biomass-derived monomers, respectively.

In the ethylene-α-olefin copolymer (A) of the present invention, to the extent that the purpose of the present invention is not impaired, an additive such as a weathering stabilizer, a heat stabilizer, an antistatic agent, an antislip agent, an antiblocking agent, an antifogging agent, a lubricant, a pigment, a dye, a nucleating agent, a plasticizer, an antiaging agent, a hydrochloric acid absorbing agent, or an antioxidant may be compounded if necessary.

[Ethylene resin composition (Z)]

One aspect of the thermoplastic resin composition (Y) according to the present invention may be an ethylene resin composition (Z), in which the additional thermoplastic resin (RY) is an ethylene-α-olefin copolymer (B) as will be described below, and the proportion of the ethylene-α-olefin copolymer (A) to the ethylene-α-olefin copolymer (B) is within a predetermined range.

(Ethylene-α-olefin copolymer (B))

The ethylene-α-olefin copolymer (B) is a copolymer of ethylene and one or more α-olefins having 4 to 10 carbon atoms, preferably ethylene and one or more α-olefins having 6 to 10 carbon atoms. Examples of the one or more α-olefins having 4 to 10 carbon atoms used for copolymerization with ethylene include 1-butene, 1-hexene, 4-methyl-1-pentene, 1-octene, and 1-decene.

The ethylene-α-olefin copolymer (B) has the following characteristics (a) to (d).

(a) The density is in the range of 890 $kg/m^3$ or more and 930 $kg/m^3$ or less, preferably 900 $kg/m^3$ or more and 925 $kg/m^3$ or less, and more preferably 905 $kg/m^3$ or more and 920 $kg/m^3$ or less.

When the density is equal to or larger than the lower limit, stickiness on the surface of the film formed from the ethylene resin composition (Z) is low, and when the density is equal to or smaller than the upper limit, the film formed from the ethylene resin composition (Z) has good impact strength, and has good mechanical strength such as heat seal strength and bag breaking strength of a bag formed of the film.

(b) The melt flow rate (MFR) is in the range of 0.1 g/10 min or more and 20 g/10 min or less, preferably 0.5 g/10 min or more and 10 g/10 min or less, and more preferably 0.8 g/10 min or more and 8.0 g/10 min or less.

When the melt flow rate (MFR) is equal to or larger than the lower limit, the film formed from the ethylene resin composition (Z) has few fish eyes and good appearance. When the melt flow rate (MFR) is equal to or smaller than the upper limit, the ethylene resin composition (Z) has a high melt tension and has good formability such as melt film stability.

(c) The ratio [MT/η* (g/P)] of the melt tension [MT (g)] at 190°C to the shear viscosity [η* (P)] (P is Poise) at 200°C at the angular velocity of 1.0 rad/s is in the range of $1.0 \times 10^{-6}$ or more and $1.0 \times 10^{-4}$ or less, preferably $5.0 \times 10^{-6}$ or more and $8.0 \times 10^{-5}$ or less, and more preferably $1.0 \times 10^{-5}$ or more and $6.0 \times 10^{-5}$ or less.

When the MT/η* is equal to or larger than the lower limit, the resulting ethylene-α-olefin copolymer (B) has a high melt tension relative to its molecular weight, and the ethylene resin composition (Z) is thus excellent in formability. When the MT/η* is equal to or smaller than the upper limit, the ethylene resin composition (Z) is excellent in mechanical strength. The MT/η* depends on the long chain branch content in the ethylene polymer. The higher the long chain branch content, the larger the MT/η*, and the lower the long chain branch content, the smaller the MT/η*.

The melt tension [MT (g)] at 190°C and the shear viscosity [η* (P)] at 200°C at the angular velocity of 1.0 rad/s are measured in the same manner as in (3) above.

(d) The amount of a component with a Log molecular weight of 5.8 or more in the molecular weight distribution curve obtained by GPC measurement is within the range of 0.01% or more and 5.0% or less, preferably 0.01% or more and 4.0% or less, and more preferably 0.01% or more and 3.0% or less.

When the amount of a component with a Log molecular weight of 5.8 or more in the molecular weight distribution curve obtained by GPC measurement is equal to or smaller than the upper limit, since intermolecular entanglements due to high molecular weight molecular chains of the ethylene-α-olefin copolymer (B) are easily loosened, molecules in

the ethylene resin composition (Z) are easy to be relaxed. Thus, a film including the ethylene resin composition (Z) has less irregularities on the surface and is excellent in transparency. Also, when it is equal to or larger than the lower limit, the ethylene resin composition (Z) is excellent in formability.

The amount of a component with a Log molecular weight of 5.8 or more in the molecular weight distribution curve obtained by GPC measurement is calculated by using gel permeation chromatography and carrying out the measurement under the following conditions. Note that, in the Examples described later, the following apparatus and other equipment were used.

[Apparatus used and others]

Measurement apparatus: HLC-8321 GPC/HT type (manufactured by Tosoh Corporation)
Data processing software: Empower 3 (manufactured by Waters Corporation)
Column: 2 x TSKgel GMH6-HT + 2 x TSKgel-HTL
(all 7.5 mm I.D. × 30 cm, manufactured by Tosoh Corporation)
Polystyrene: monodisperse polystyrene (manufactured by Tosoh Corporation); #3 std set

[Measurement conditions]

Column temperature: 140°C
Mobile phase: o-dichlorobenzene (containing 0.025% BHT)
Detector: differential refractometer
Flow rate: 1.0 ml/min
Sample concentration: 0.1% (w/v)
Injection volume: 400 μL
Sampling time interval: 0.5 s
Column calibration: polystyrene
Molecular weight conversion: PE conversion / generic calibration method

From the obtained molecular weight distribution curve, the amount (%) of a component with a Log molecular weight of 5.8 or more is calculated.

<Method for producing ethylene-α-olefin copolymer (B)>

The ethylene-α-olefin copolymer (B) can be obtained by polymerizing ethylene and one or more α-olefins having 4 or more and 10 or less carbon atoms. The polymerization catalyst used and polymerization conditions are not particularly limited as long as one satisfying the above requirements is obtained. As the ethylene-α-olefin copolymer (B), for example, commercially available products such as a linear low density polyethylene, an ethylene-α-olefin copolymer, or a high density polyethylene can be used. As specific examples, those satisfying the requirements (a) to (d) can be selected from LLDPE Evolue (registered trademark) and ULTZEX (registered trademark) manufactured by Prime Polymer Co., Ltd.

<Ethylene resin composition (Z)>

The ethylene resin composition (Z) according to the present invention includes the ethylene-α-olefin copolymer (A) and the ethylene-α-olefin copolymer (B), and has a mass fraction ($W_A$) that is 5 to 90% by weight and a mass fraction ($W_B$) that is 10 to 95% by weight, provided that the sum of $W_A$ and $W_B$ is 100% by mass. $W_A$ is preferably 10 to 80% by weight, more preferably 20 to 70% by weight. Within this range, the ethylene resin composition (Z) is excellent in formability and mechanical strength, and the film formed from the ethylene resin composition (Z) is excellent in transparency.

Also, the ethylene resin composition (Z) according to the present invention may substantially consists of the ethylene-α-olefin copolymer (A) and the ethylene-α-olefin copolymer (B), but is not limited to this. The ethylene resin composition (Z) may also contain a thermoplastic resin that is neither the ethylene-α-olefin copolymer (A) nor the ethylene-α-olefin copolymer (B) (hereinafter, referred to as the "additional thermoplastic resin (RZ)"), in addition to the ethylene-α-olefin copolymer (A) and the ethylene-α-olefin copolymer (B). By blending the "additional thermoplastic resin (RZ)" with the ethylene-α-olefin copolymer (A) and the ethylene-α-olefin copolymer (B), the ethylene resin composition (Z)

obtained as the thermoplastic resin composition (Y) is excellent in formability and is also excellent in mechanical strength.

The blend ratio of the total of the ethylene-α-olefin copolymer (A) and the ethylene-α-olefin copolymer (B) to the "additional thermoplastic resin (RZ)" (total mass of the ethylene-α-olefin copolymer (A) and the ethylene-α-olefin copolymer (B)/mass of the additional thermoplastic resin (RZ)) is usually 99.9/0.1 to 0.1/99.9, preferably 90/10 to 10/90, and still more preferably 70/30 to 30/70.

(Addiional thermoplastic resin (RZ))

As the additional thermoplastic resin (RZ), those exemplified as the additional thermoplastic resin (RY) are used.

In the ethylene resin composition (Z) of the present invention, in addition to the "additional thermoplastic resin (RZ)", the above-mentioned additive may be further compounded if necessary, to the extent that the purpose of the present invention is not impaired.

The total amount of additives compounded is generally 10 parts by mass or less, preferably 1 part by mass or less, and more preferably 0.5 parts by mass or less, relative to 100 parts by mass in total of components other than the additives in the ethylene resin composition (Z).

<Method for producing ethylene resin composition (Z)>

The ethylene resin composition (Z) can be produced by melt kneading the ethylene-α-olefin copolymer (A) and the ethylene-α-olefin copolymer (B), or by dry blending pellets of granulated ethylene-α-olefin copolymer (A) and pellets of ethylene-α-olefin copolymer (B). In the case of production by melt kneading, a continuous extruder or closed type kneading machine can be used. Examples thereof include apparatuses such as a single screw extruder, a twin screw extruder, a mixing roll, a Banbury mixer, and a kneader. Of these, a single screw extruder or a twin screw extruder is preferably used from the viewpoints of economy and processing efficiency, for example.

Here, when carrying out the melt kneading and dry blending, the "additional thermoplastic resin" can be blended in addition to the ethylene-α-olefin copolymer (A) and the ethylene-α-olefin copolymer (B). Also, the additives may be further compounded in addition to the "additional thermoplastic resin" or in place of the "additional thermoplastic resin".

The order in which the "additional thermoplastic resin (RZ)" and the additives are added is not particularly limited. For example, the "additional thermoplastic resin (RZ)" and the additives may be blended simultaneously with one or both of the ethylene-α-olefin copolymer (A) and the ethylene-α-olefin copolymer (B), or they may be added after kneading the ethylene-α-olefin copolymer (A) and the ethylene-α-olefin copolymer (B).

Each of the ethylene-α-olefin copolymer (A) and the ethylene-α-olefin copolymer (B) may include constitutional units derived from at least one or more types of a biomass-derived ethylene or α-olefin. The monomers of the same kind constituting the polymer may be biomass-derived monomers only, may be fossil fuel-derived monomers only, or may include both biomass-derived monomers and fossil fuel-derived monomers. The biomass-derived monomer is a monomer derived from any renewable natural raw materials such as the ones derived from plants or derived from animals, including fungi, yeasts, algae, and bacteria, and their residues. The monomer contains the 14C isotope as carbon at a proportion of about $1 \times 10^{-12}$ and has a biomass carbon concentration (pMC) of about 100 (pMC) as measured in conformity with ASTM D6866. The biomass-derived ethylene and α-olefin are obtained by, for example, conventionally known methods. It is preferred from the viewpoint of reducing environmental load that the ethylene-α-olefin copolymer (A) and/or the ethylene-α-olefin copolymer (B) include a constitutional unit derived from a biomass-derived monomer.

[Shaped article, film, and laminate]

By processing the ethylene-α-olefin copolymer (A) or the thermoplastic resin composition (Y) including the ethylene-α-olefin copolymer (A) (for example, the ethylene resin composition (Z)) of the present invention, a shaped article, preferably a film, and more preferably a laminate including the film, having excellent mechanical strength is obtained with excellent formability.

The ethylene-α-olefin copolymer (A) or the thermoplastic resin composition (Y) including the ethylene-α-olefin copolymer (A) of the present invention is processed by general film forming, general sheet forming, blow molding, injection molding, and extrusion. Examples of the film forming include extrusion lamination, T-die film forming, and inflation molding (air-cooling, water-cooling, multi-stage cooling, or high-speed processing). Although the obtained film can be used as a single layer, a variety of functions can be further imparted by making it multilayered. Examples of the technique used in such a case include the co-extrusion method. A lamination technique such as extrusion lamination or dry lamination enables lamination on paper or a barrier film such as aluminum foil, vapor-deposited film, or coating film, which is difficult to be co-extruded. A multilayer structure can be formed by coextrusion in blow molding, injection molding, or extrusion as well as in film forming to produce a highly functional product.

Examples of the shaped article obtained by processing the ethylene-α-olefin copolymer (A) or the thermoplastic

resin composition (Y) including the ethylene-α-olefin copolymer (A) of the present invention include a film, a sheet, a blown infusion bag, a blown bottle, a gasoline tank, a tube by extrusion, a pipe, a wire coating, a tea off cap, an injection molded product such as daily necessities, a fiber, and a large molded product obtained by rotational molding.

Furthermore, the film obtained by processing the ethylene-α-olefin copolymer (A) or the thermoplastic resin composition (Y) including the ethylene-α-olefin copolymer (A) of the present invention is suitable for various films for packaging such as a bag for water-containing product, a bag for liquid soup packaging, a paper container for liquid, an original laminated fabric, a specially-shaped bag for liquid packaging (such as a standing pouch), a standard bag, a heavy duty bag, a wrap film, a sugar bag, a bag for oil-containing product, and food packaging; and also suitable for a protective film, an infusion bag, an agricultural material, a bag-in-boxe, and a clean film used for packaging of a semiconductor material, a pharmaceutical product, or food. The above film can also be used as a multilayer film by pasting it with a substrate such as nylon, polyester, or polyolefin film.

The laminate in which at least one layer includes the ethylene-α-olefin copolymer (A) or the thermoplastic resin including the ethylene-α-olefin copolymer (A) of the present invention will be described below in further detail.

Examples of layers constituting the laminate other than the aforementioned layer include a substrate layer and a barrier layer.

Examples of the substrate used as the substrate layer include a film of, for example, polyamide, polyester, polypropylene, polyethylene, or ethylene-vinyl alcohol copolymer. The above film is preferably an oriented film. Examples thereof also include paper and a paper substrate formed by coating paper with polyethylene. These substrates may be subjected to printing or a variety of coatings if necessary. Also, if necessary, a variety of pre-treatments such as corona treatment, flame treatment, plasma treatment, ultraviolet treatment, and anchor coat treatment may be performed.

Specific examples of the substrate include paper such as fine paper, kraft paper, thin paper, and Kent paper; cellophane; woven fabric; non-woven fabric; a nylon substrate such as oriented nylon, non-oriented nylon, special nylon (such as MXD6), and K-nylon (polyvinylidene fluoride coat); oriented PET (polyethylene terephthalate); non-oriented PET (polyethylene terephthalate); K-PET (polyethylene terephthalate); a polypropylene substrate such as oriented polypropylene (OPP), non-oriented polypropylene (CPP), K-PP, and co-extruded film PP; a LDPE film; a LLDPE film; an EVA film; an oriented LDPE film; and a oriented HDPE film.

Examples of the barrier substrate used as the barrier layer include a metal foil and a thermoplastic resin film on which a metal or inorganic substance has been vapor-deposited, and further include a thermoplastic resin film to which a barrier coating has been applied. Examples of the thermoplastic resin film include oriented nylon, oriented PET (polyethylene terephthalate), oriented polypropylene (OPP), and non-oriented polypropylene (CPP).

The raw materials for part of the laminate such as the substrate and the barrier substrate may contain an ethylene polymer and a propylene polymer including biomass-derived monomers.

In the present invention, the metal foil refers to a metal foil of aluminum, gold, silver, iron, copper, nickel, or an alloy mainly composed of these metals, for example. The thermoplastic resin film on which a metal has been vapor-deposited refers to a film in which, for example, a metal such as aluminum or silicon has been vapor-deposited on the surface of a film of, for example, polyester, or polyamide. The thermoplastic resin film on which an inorganic substance has been vapor-deposited refers to a thermoplastic resin film on which silica or alumina has been vapor-deposited. The barrier coating means coating the film surface with a barrier resin such as polyvinyl alcohol or polyvinylidene chloride.

The substrate layer is used as, for example, a printing substrate. On the other hand, the barrier substrate is not usually used as a printing substrate.

A specific configuration of the laminate in the present invention will be exemplified below, but it is not limited to the following.

The term PE lamination in the configurations below means that an ethylene resin is laminated by extrusion lamination. The ethylene resin used for at least one PE lamination in each configuration is the ethylene-α-olefin copolymer (A) of the present invention or a composition (W) containing it.

When the PE lamination using the ethylene-α-olefin copolymer (A) of the present invention or the composition (W) containing it is used as an adhesive layer adjacent to the aluminum vapor deposition layer of an aluminum vapor deposition film or an aluminum foil, the PE lamination is excellent in adhesive strength with the aluminum vapor deposition layer or the aluminum foil.

The term co-extrusion lamination (acid copolymer/PE lamination) means laminating two layers of an acid copolymer and an ethylene resin by co-extrusion lamination, where the acid copolymer is adjacent to an aluminum foil. Examples of the acid copolymer include an ethylene-acryl copolymer (EAA), an ethylene-methacrylic acid copolymer (EMAA), and an ethylene-acrylic acid ester copolymer (such as EEA, EMA, or EMMA). The film used for the innermost layer (the side opposite to the oriented substrate film) is a thermoplastic resin film, and it is preferable to use a propylene resin film or an ethylene resin film.

Oriented nylon / adhesive / PE lamination (1) / PE lamination (2);

Paper / PE lamination;
Oriented polypropylene / adhesive / PE lamination (1) / aluminum foil / adhesive / film or PE lamination (2);
Oriented polypropylene / adhesive / PE lamination (1) / aluminum vapor deposition film (the aluminum vapor deposition layer is adjacent to the PE lamination (1) layer);
Oriented polypropylene / adhesive / PE lamination (1) / aluminum vapor deposition film / adhesive / film or PE lamination (2) (the aluminum vapor deposition layer is adjacent to the PE lamination (1) layer);
Oriented polypropylene / adhesive / extrusion lamination (1) / inorganic substance vapor deposition film;
Oriented polypropylene / adhesive / PE lamination (1) / inorganic substance vapor deposition film / adhesive / film or PE lamination (2);
Oriented polyethylene terephthalate / adhesive / extrusion lamination (1) / aluminum foil / adhesive / film or PE lamination (2);
Oriented polyethylene terephthalate / adhesive / extrusion lamination (1) / aluminum vapor deposition film / adhesive / film or PE lamination (2) (the aluminum vapor deposition layer is adjacent to the PE lamination (1) layer);
Oriented polyethylene terephthalate / adhesive / PE lamination (1) / inorganic substance vapor deposition film;
Oriented polyethylene terephthalate / adhesive / PE lamination (1) / inorganic substance vapor deposition film / adhesive / film or PE lamination (2);
PE lamination (1) / paper / PE lamination (2) / aluminum foil / co-extrusion lamination (acid copolymer/PE lamination (3));
PE lamination (1) / paper / PE lamination (2) / aluminum foil / adhesive / polyethylene terephthalate / adhesive / film or PE lamination (3);
PE lamination (1) / paper / PE lamination (2) / aluminum vapor deposition film / adhesive / film or PE lamination (3); and
PE lamination (1) / paper / PE lamination (2) / inorganic substance vapor deposition film / adhesive / film or PE lamination (3).

Examples

Hereinafter, the present invention will be described further specifically with reference to Examples. However, the present invention is not limited to the description in the following Examples.

[Measurement and evaluation methods]

In the following Examples, for example, various physical properties of ethylene-$\alpha$-olefin copolymers, for example, were measured by the methods described in [Description of Embodiments], and the following methods were employed for evaluation methods not described in [Description of Embodiments].

<u>Extrusion lamination evaluation:</u>

[Neck-in]

An ethylene-$\alpha$-olefin copolymer (hereinafter, also referred to as the "ethylene polymer") was extrusion-laminated onto 50 g/$m^2$ kraft paper, which is a substrate, using a laminator manufactured by Sumitomo Heavy Industries, Ltd. having a 65 mm$\varphi$ extruder and a T-die with a die width of 500 mm, under the following conditions.

- Air gap: 130 mm
- Resin temperature at the die: 320°C
- Take-up speed: 80 m/min
- Film thickness: 20 um

The width of the T-die and the width of the film laminated on the kraft paper at each take-up speed were defined as $L_0$ and L, respectively, and the neck-in was calculated as $L_0$ - L.

[Film break speed and take-off surging (draw resonance)]

An ethylene polymer was extrusion-laminated onto 50 g/$m^2$ kraft paper, which is a substrate, using a laminator manufactured by Sumitomo Heavy Industries, Ltd. having a 65 mm$\varphi$ extruder and a T-die with a die width of 500 mm, under conditions with an air gap of 130 mm and a resin temperature at the die of 320°C. The extrusion amount was set such that the film thickness was 20 um at a take-up speed of 80 m/min. The take-up speed was increased, and the take-up speed at which the melt film was broken was defined as the film break speed. In addition, the take-up speed was

increased, and neck-in was measured five times at a take-up speed of 200 m/min. In the case where the neck-in value was measured two or more times to be ±1.5 mm or more from its average value, it was considered to be occurrence of take-off surging (draw resonance).

[Aluminum adhesive strength ratio]

An ethylene polymer was extrusion-laminated between the substrate and the aluminum vapor deposition film to a film thickness of 15 um using a laminator manufactured by Sumitomo Heavy Industries, Ltd. having a 65 mmφ extruder and a T-die with a die width of 500 mm, under conditions with a resin temperature under the die of 320°C and a take-up speed of 150 m/min. As the substrate, an oriented polyethylene terephthalate film with a thickness of 12 um (trade name: Emblet (registered trademark), manufactured by Unitika Ltd.) was used, to one side (ethylene polymer layer side) of which a two-component curable urethane-based anchor coating agent had been applied. As the aluminum vapor deposition film, the trade name ML PET (manufactured by Mitsui Chemicals Tohcello, Inc.) with a thickness of 12 μm was used. The extrusion-laminated ethylene polymer is in contact with the aluminum surface. The obtained extrusion-laminated film was cut into strips with a width of 15 mm, and the adhesive strength between the obtained ethylene polymer layer and the aluminum vapor deposition film layer was determined by carrying out T-peeling at a peeling speed of 300 mm/min. The ratio of the determined peel strength to the peel strength (LDPE) determined in the same manner using a high pressure LDPE (high pressure low density polyethylene, Suntec (registered trademark)-LD "L1850A" manufactured by Asahi Kasei Corporation) instead of the ethylene polymer was defined as the AL adhesive strength ratio.

AL adhesive strength ratio = peel strength/peel strength (LDPE)

[Trouser tear strength]

An ethylene polymer was extrusion-laminated onto 50 g/m$^2$ kraft paper, which is a substrate, to a film thickness of 20 um, using a laminator manufactured by Sumitomo Heavy Industries, Ltd. having a 65 mmφ extruder and a T-die with a die width of 500 mm, under conditions with an air gap of 130 mm, a resin temperature under the die of 320°C, and a take-up speed of 80 m/min. In conformity with JIS K7128-1, the obtained laminate was cut into a width of 50 mm and a length of 150 mm, a 75 mm cut was made in the center of the width, and the tear strength was measured at a speed of 200 mm/min.

Casting evaluation:

From an ethylene polymer, a film with a thickness of 40 um was fabricated using a cast-film forming machine manufactured by Tanabe Plastics Machinery Co., Ltd. having a 40 mmφ extruder and a T-die with a die width of 500 mm, at a die temperature of 40°C and a chill roll temperature of 40°C. Upon film formation, 2% by weight of an antiblocking agent masterbatch (antiblocking agent concentration: 20% by weight, EAZ-20 manufactured by Prime Polymer Co., Ltd.) and 1% by weight of a slip agent masterbatch (slip agent concentration: 4% by weight, ESQ-4 manufactured by Prime Polymer Co., Ltd.) was compounded into the ethylene polymer by dry blending.

The obtained film was measured as follows.

Inflation molding evaluation:

From the ethylene polymer, a film with a thickness of 40 um was obtained using an inflation molding machine manufactured by Sumitomo Heavy Industries Modern, Ltd. with a 50 mmφ extruder and a die diameter of 100 mm under conditions with a dice temperature of 190°C, an extrusion amount of 29 kg/hr, and a tube width of 320 mm. For the obtained film, the following items were measured.

[Haze]

In conformity with JIS 7136, the total haze of the obtained film was measured.

[Internal haze]

The obtained film was placed in a cell filled with cyclohexanol and measured in conformity with JIS 7136.

[Gloss 20°]

The gloss of the obtained film was measured at an incidence angle of 20° in conformity with JIS Z8741.

[Tensile stress at break]

The tensile stress at break was measured in the MD direction and TD direction of the obtained film at a test speed of 500 mm/min, in conformity with JIS K6781.

[Tensile modulus]

The tensile modulus was measured in the MD direction and TD direction of the obtained film at a test speed of 200 mm/min, in conformity with JIS K6781.

[Dart impact]

In conformity with the ASTM D1709 A method, the obtained film was clamped with a pneumatic clamping system, a hemispherical dart was dropped from a fixed height, and the load at which 50% of the film was broken was read out from a graph.

[Melt tension of composition]

The film obtained by inflation molding was measured using a capillary rheometer manufactured by Toyo Seiki Seisaku-sho, Ltd.: CAPILOGRAPH 1D. The conditions are as follows: resin temperature of 190°C, melting time of 6 min, barrel diameter of 9.55 mmφ, extrusion speed of 15 mm/min, winding speed of 24 m/min (in the case where the melt filament is broken, winding speed is reduced by 5 m/min), nozzle diameter of 2.095 mmφ, and nozzle length of 8 mm.

[Melt film stability]

The melt film (bubble) stability at the time of inflation molding was visually confirmed. The meanings of the symbols (evaluation results) in Table 13 are as follows.

AA: The melt film (bubble) is stable.
CC: The stability of the melt film (bubble) is poor and swaying is intense.

[Raw materials used]

The transition metal compounds and components (G) used in Examples and other cases are as follows.

Transition metal compound (A-1): dimethylsilylene(2-indenyl)(4-(3,5-di-tert-butyl-4-methoxyphenyl)-7-methoxy-1-indenyl)zirconium dichloride [synthesized by the method described in patent literature JP 2019-059933A]
Transition metal compound (B-1): dimethylsilylene(3-n-propylcyclopentadienyl)(cyclopentadienyl)zirconium dichloride [synthesized based on the method described in patent literature JP 5455354B]
Transition metal compound (B-2):
isopropylidene(cyclopentadienyl) (2,7-di-tert-butylfluorenyl)zirconium dichloride [synthesized based on the method described in patent literature JP H04-069394A] Component (G-1): lauryl diethanolamine (manufactured by Kao Corporation)
Component (G-2): Emulgen (registered trademark) 108 (manufactured by Kao Corporation)

<Synthesis of prepolymerized catalyst (XP-1)>

In a reactor equipped with a stirrer with an internal volume of 270 L, 10 kg of silica (average particle size 70 um, specific surface area 340 $m^2$/g, pore volume 1.3 $cm^3$/g, calcined at 250°C) manufactured by Fuji Silysia Chemical Ltd. as the solid support (S) was suspended in 77 L of toluene under a nitrogen atmosphere, which was then cooled to 0 to 5°C. To this suspension, 20.4 L of a toluene solution of methylaluminoxane (3.5 mol/L in terms of Al atoms) was added dropwise as the component (C) over 30 minutes. At this time, the temperature in the system was held at 0 to 5°C. The reaction was continued at 0 to 5°C for 30 minutes, then the temperature was raised to 95 to 100°C over about 1.5 hours, and the reaction was continued at 95 to 100°C for 4 hours. Thereafter, the temperature was lowered to ordinary

temperature, the supernatant liquid was removed by decantation, and after further washing twice with toluene, a toluene slurry with a total volume of 58.0 L was prepared. Part of the obtained slurry component was collected and its concentration was examined. The slurry concentration was found to be 248.0 g/L and the Al concentration was found to be 1.21 mol/L.

Next, 6.1 L of the toluene slurry obtained as described above and 21.9 L of toluene were charged into a reactor equipped with a stirrer with an internal volume of 114 L, which had been sufficiently purged with nitrogen, and 5.4 L of an 8 mM toluene solution of the transition metal compound (A-1) was added to bring them into contact with each other for 1 hour at a system temperature of 20 to 25°C. Then, the supernatant liquid was removed by decantation, and after washing twice using hexane, a slurry with a total volume of 30.9 L was prepared. While adjusting the obtained slurry to 10 to 15°C, 3.1 L of a 0.92 M hexane solution of diisobutylaluminum hydride was added, supply of ethylene gas was initiated at a flow rate of 0.74 kg/hr, and after 34.3 mL of 1-hexene was added, temperature raising was initiated. While adjusting the system temperature to 32 to 38°C, 34.3 ml of 1-hexene was added five times every 1 hour, and the ethylene supply was terminated when the ethylene supply amount reached 4.5 kg, 6 hours after the initiation of ethylene supply. Thereafter, the inside of the system was sufficiently purged with nitrogen, the supernatant liquid was removed by decantation, and after washing four times using hexane, a slurry with a total volume of 21.9 L was prepared. While maintaining the obtained slurry at 35 to 40°C, 6.1 L of a 10 g/L hexane solution of the component (G-1) was added to bring them into contact with each other for 2 hours. After inserting all of the obtained slurry into an evaporative dryer equipped with a stirrer with an internal volume of 43 L under a nitrogen atmosphere, the pressure in the dryer was reduced to -68 kPaG over about 60 minutes, and when the pressure reached -68 kPaG, the slurry was vacuum dried for about 4.3 hours to remove hexane and volatile matter in the prepolymerized catalyst component. The pressure was further reduced to -100 kPaG, and when the pressure reached -100 kPaG, vacuum drying was performed for 8 hours to obtain 6.2 kg of a prepolymerized catalyst (XP-1). Part of the obtained prepolymerized catalyst (XP-1) was collected and its compositional features were examined, and it was found that 0.56 mg of Zr atoms were contained per 1 g of the prepolymerized catalyst component.

<Synthesis of prepolymerized catalyst (XP-2)>

In a reactor equipped with a stirrer with an internal volume of 270 L, 10 kg of silica manufactured by Fuji Silysia Chemical Ltd. (average particle size 70 um, specific surface area 340 $m^2$/g, pore volume 1.3 $cm^3$/g, calcined at 250°C) as the solid support (S) was suspended in 77 L of toluene under a nitrogen atmosphere, which was then cooled to 0 to 5°C. To this suspension, 20.4 L of a toluene solution of methylaluminoxane (3.5 mol/L in terms of Al atoms) as the component (C) was added dropwise over 30 minutes. At this time, the temperature in the system was kept at 0 to 5°C. The reaction was continued at 0 to 5°C for 30 minutes, the temperature was then raised to 95 to 100°C over about 1.5 hours, and the reaction was continued at 95 to 100°C for 4 hours. After that, the temperature was lowered to ordinary temperature, the supernatant liquid was removed by decantation, and after further washing twice with toluene, a toluene slurry with a total volume of 58.0 L was prepared. Part of the obtained slurry component was collected, and its concentration was examined. The slurry concentration was found to be 248.0 g/L and the Al concentration was found to be 1.21 mol/L.

Next, 6.1 L of the toluene slurry obtained as described above and 22.7 L of toluene were charged into a reactor equipped with a stirrer with an internal volume of 114 L, which had been sufficiently purged with nitrogen, and 1.5 L of an 8 mM toluene solution of the transition metal compound (B-1) and 3.1 L of an 8 mM toluene solution of the transition metal compound (B-2) were added to bring them into contact with each other for 1 hour at a system temperature of 70 to 75°C. Then, the supernatant liquid was removed by decantation, and after washing twice using hexane, a slurry with a total volume of 29.8 L was prepared. While adjusting the obtained slurry to 35 to 40°C, 4.0 L of a 0.92 M hexane solution of diisobutylaluminum hydride was added, and supply of ethylene gas was initiated at a flow rate of 795.4 L/hr. The ethylene supply was terminated when the ethylene supply amount reached 3,980 L, 5 hours after the initiation of ethylene supply. Thereafter, the inside of the system was sufficiently purged with nitrogen, the supernatant liquid was removed by decantation, and after washing four times using hexane, a slurry with a total volume of 21.7 L was prepared. While maintaining the obtained slurry at 35 to 40°C, 3.8 L of a 10 mg/mL hexane solution of the component (G-2) was added to bring them into contact with each other for 2 hours. All of the obtained slurry was inserted into an evaporative dryer equipped with a stirrer with an internal volume of 43 L under a nitrogen atmosphere, and the pressure in the dryer was then reduced to -68 kPaG over about 60 minutes. When the pressure reached -68 kPaG, the slurry was vacuum dried for about 4.3 hours to remove hexane and volatile matter in the prepolymerized catalyst component. The pressure was further reduced to -100 kPaG, and when the pressure reached -100 kPaG, vacuum drying was performed for 8 hours to obtain 6.1 kg of a prepolymerized catalyst (XP-2). Part of the obtained prepolymerized catalyst (XP-2) was collected and its compositional features were examined, and it was found that 0.52 mg of Zr atoms were contained per 1 g of the prepolymerized catalyst component.

<Production of ethylene-α-olefin copolymer>

[Example 1]

Production of an ethylene polymer was carried out by the vapor phase polymerization process using a fluidized bed type vapor phase polymerization reactor. 24 kg of spherical ethylene polymer particles with an average particle size of 900 um were introduced into the reactor in advance, nitrogen was supplied to form a fluidized bed, and ethylene, hydrogen, 1-hexene, the prepolymerized catalyst, and Electrostripper (registered trademark) EA (manufactured by Kao Corporation) were then continuously supplied so as to achieve a steady state under the polymerization conditions shown in Table 8. The polymerization reaction product was continuously withdrawn from the reactor and dried in a drying apparatus to obtain ethylene-α-olefin copolymer (A-1) powder.

The obtained ethylene polymer powder was melt-kneaded using a twin screw co-rotating 46 mmφ extruder manufactured by Ikegai Corp. under conditions with a set temperature of 200°C and a screw rotation speed of 300 rpm, then extruded into strands, and cut to obtain pellets. The obtained pellets were used as the sample for measurement to measure the physical properties. The measurement results are shown in Table 9.

Furthermore, using the obtained pellets, the above-mentioned extrusion lamination evaluation was carried out. The results are shown in Table 11. In addition, using the obtained pellets, the above-mentioned casting evaluation was carried out. The results are shown in Table 12.

[Examples 3, 4, and 8 to 12]

Powders of ethylene-α-olefin copolymers (A-3, 4, and 8 to 12) were each prepared, and various measurements and evaluations were also carried out in the same manner as in Example 1, except that the polymerization conditions were changed as described in Table 8. The results are shown in Tables 9, 11, and 12. In Table 8, Chemistat (registered trademark) 2500 (manufactured by Sanyo Chemical Industries, Ltd.), a component has not been used in Example 1, is described.

[Example 2]

Production of an ethylene polymer was carried out in a two stage polymerization process in which the fluidized bed type vapor phase polymerization reactor used in Example 1 was used as the former stage reactor and a fluidized bed type vapor phase polymerization reactor with an internal volume of 0.6 $m^3$ was also used as the latter stage reactor. Two stage polymerization means that the polymerization reaction product obtained in the former stage polymerization reactor is continuously withdrawn to the latter stage polymerization reactor, and the polymerization reaction is carried out in the latter stage polymerization reactor continuously as in the former stage. 24 kg of spherical ethylene polymer particles with an average particle size of 900 um were introduced into the former stage reactor in advance. Nitrogen was supplied to this to form a fluidized bed. Ethylene, hydrogen, 1-hexene, the prepolymerized catalyst, and Electrostripper EA were continuously supplied so as to achieve a steady state in both the former stage polymerization reactor and the latter stage polymerization reactor under the polymerization conditions shown in Table 8. However, the prepolymerized catalyst and Electrostripper EA were supplied only to the former stage polymerization reactor. The polymerization reaction product from the two stage polymerization, obtained in the latter stage polymerization reactor, was continuously withdrawn from the latter stage polymerization reactor and dried in a drying apparatus to obtain ethylene-α-olefin copolymer (A-2) powder.

For the obtained ethylene-α-olefin copolymer (A-2) powder, various measurements and evaluations were carried out in the same manner as in Example 1. The results are shown in Tables 9, 11, and 12.

[Examples 5 to 7]

Powders of ethylene-α-olefin copolymers (A-5 to 7) were each prepared, and various measurements and evaluations were also carried out in the same manner as in Example 2, except that the polymerization conditions were changed as described in Table 8. The results are shown in Tables 9, 11, and 12.

[Comparative Example 1]

Powder of an ethylene-α-olefin copolymer (a-1) was prepared, and various measurements and evaluations were also carried out in the same manner as in Example 1, except that the polymerization conditions were changed as described in Table 8. The results are shown in Tables 9, 11, and 12. In Table 8, Chemistat (registered trademark) 2500 (manufactured by Sanyo Chemical Industries, Ltd.), a component that has not been used in Example 1, is described.

[Comparative Example 2]

For Suntec-LD "L1850A" (density: 918 kg/m$^3$, MFR: 6.5 g/10 min), which is a high pressure low density polyethylene manufactured by Asahi Kasei Corporation, the extrusion lamination evaluation and the casting evaluation were carried out in the same manner as in Example 1. The results are shown in Tables 11 and 12.

[Comparative Example 3]

Powder of an ethylene-α-olefin copolymer (a-3) was obtained in the same manner as for the ethylene polymer (α-1) in Production Example 1 described in patent literature JP 5943941B. Various measurement results are shown in Table 9.

[Example 13 and 14]

Powders of ethylene-α-olefin copolymers (A-13 and 14) were each prepared, and various measurements and evaluations were also carried out in the same manner as in Production Example 1, except that the polymerization conditions were changed as described in Table 8,. The results are shown in Table 9.

<Ethylene-α-olefin copolymer (B)>

[Ethylene-α-olefin copolymer (B-1)]

For Evolue GD1588 manufactured by Prime Polymer Co., Ltd., measurements of physical properties were carried out. The measurement results are shown in Table 10.

[Ethylene-α-olefin copolymer (b-2)]

For Neo-zex 2006H manufactured by Prime Polymer Co., Ltd., measurements of physical properties were carried out. The measurement results are shown in Table 10.

[Ethylene-α-olefin copolymer (B-3)]

For Evolue SP1510 manufactured by Prime Polymer Co., Ltd., measurements of physical properties were carried out. The measurement results are shown in Table 10.

<Production of ethylene resin composition>

[Example 15]

5% by weight of the ethylene-α-olefin copolymer (A-13) pellets and 95% by weight of the ethylene-α-olefin copolymer (B-1) pellets were dry blended and subjected to the inflation molding evaluation. The evaluation results are shown in Table 13.

[Example 16]

10% by weight of the ethylene-α-olefin copolymer (A-13) pellets and 90% by weight of the ethylene-α-olefin copolymer (B-1) pellets were dry blended and subjected to the inflation molding evaluation. The evaluation results are shown in Table 13.

[Example 17]

15% by weight of the ethylene-α-olefin copolymer (A-13) pellets and 85% by weight of the ethylene-α-olefin copolymer (B-1) pellets were dry blended and subjected to the inflation molding evaluation. The evaluation results are shown in Table 13.

[Example 18]

60% by weight of the ethylene-α-olefin copolymer (A-14) pellets and 40% by weight of the ethylene-α-olefin

copolymer (B-3) pellets were dry blended and subjected to the inflation molding evaluation. The evaluation results are shown in Table 13.

[Example 19]

80% by weight of the ethylene-α-olefin copolymer (A-14) pellets and 20% by weight of the ethylene-α-olefin copolymer (B-3) pellets were dry blended and subjected to the inflation molding evaluation. The evaluation results are shown in Table 13.

[Example 20]

20% by weight of the ethylene-α-olefin copolymer (A-6) pellets and 80% by weight of the ethylene-α-olefin copolymer (B-1) pellets were dry blended and subjected to the inflation molding evaluation. The evaluation results are shown in Table 13.

[Example 21]

30% by weight of the ethylene-α-olefin copolymer (A-6) pellets and 70% by weight of the ethylene-α-olefin copolymer (B-1) pellets were dry blended and subjected to the inflation molding evaluation. The evaluation results are shown in Table 13.

[Comparative Example 4]

80% by weight of the ethylene-α-olefin copolymer (a-3) pellets and 20% by weight of the ethylene-α-olefin copolymer (B-3) pellets were dry blended and subjected to the inflation molding evaluation. The evaluation results are shown in Table 13.

[Comparative Example 5]

The ethylene-α-olefin copolymer (B-1) was used and subjected to the inflation molding evaluation. The evaluation results are shown in Table 13.

[Reference Example 1]

15% by weight of the ethylene-α-olefin copolymer (A-13) pellets and 85% by weight of the ethylene-α-olefin copolymer (b-2) pellets were dry blended and subjected to the inflation molding evaluation. The evaluation results are shown in Table 13.

Table 8

| | | | Example 1 | Example 2 | Example 3 | Example 4 | Example 5 | Example 6 | Example 7 | Example 8 |
|---|---|---|---|---|---|---|---|---|---|---|
| Ethylene-α-olefin copolymer | | | A-1 | A-2 | A-3 | A-4 | A-5 | A-6 | A-7 | A-8 |
| Polymerization conditions in former stage polymerization reactor | Prepolymerized catalyst component | No. | XP-1 | XP-1 | XP-1 | XP-1 | XP-1 | XP-1 | XP-1 | XP-1 |
| | Prepolymerized catalyst supply rate | g/hr | 3.1 | 7.7 | 3.6 | 4.6 | 7.0 | 8.4 | 14.1 | 8.0 |
| | Ethylene supply rate | $Nm^3/h$ | 5.8 | 8.5 | 6.0 | 6.0 | 7.6 | 11.0 | 11.0 | 5.8 |
| | Hydrogen supply rate | $Nm^3/h$ | 0.0030 | 0.0015 | 0.0200 | 0.0225 | 0.0115 | 0.0340 | 0.0350 | 0.0270 |
| | 1-Hexene supply rate | kg/h | 0.62 | 1.40 | 0.73 | 0.70 | 0.96 | 1.20 | 1.00 | 0.82 |
| | Polymerization temperature | °C | 71 | 71 | 75 | 75 | 75 | 75 | 75 | 75 |
| | Polymerization pressure | MPa·G | 1.7 | 1.7 | 1.7 | 1.7 | 1.7 | 2.0 | 2.0 | 1.7 |
| | Ethylene partial pressure | MPa·A | 1.0 | 1.0 | 1.0 | 1.0 | 1.0 | 1.5 | 1.5 | 1.0 |
| | Electrostripper EA supply rate | g/h | 0.053 | 0.080 | 0.050 | 0.050 | 0.074 | 0.113 | 0.107 | 0.053 |
| | Chemistat 2500 supply rate | g/h | - | - | - | - | - | - | - | - |
| | Gas linear velocity | m/sec | 0.70 | 0.70 | 0.70 | 0.70 | 0.70 | 0.70 | 0.70 | 0.70 |
| | Residence time | hr | 4.5 | 3.0 | 4.8 | 4.8 | 3.2 | 3.2 | 3.1 | 4.5 |

(continued)

| | | | Example 1 | Example 2 | Example 3 | Example 4 | Example 5 | Example 6 | Example 7 | Example 8 |
|---|---|---|---|---|---|---|---|---|---|---|
| Ethylene-α-olefin copolymer | | | A-1 | A-2 | A-3 | A-4 | A-5 | A-6 | A-7 | A-8 |
| | Vapor phase: hydroaen/ ethylene ratio | m.r. ($\times 10^{-4}$) | 15 | 6 | 17 | 19 | 11 | 15 | 18 | 24 |
| | Vapor phase: 1-hexene/ethylene ratio | m.r. | 0.011 | 0.008 | 0.008 | 0.007 | 0.007 | 0.009 | 0.009 | 0.007 |
| Polymer yield in former stage polymerization reactor | | kg/h | 5.3 | 8.0 | 5.0 | 5.0 | 7.4 | 7.5 | 7.1 | 5.3 |

(continued)

| | | | Example 1 | Example 2 | Example 3 | Example 4 | Example 5 | Example 6 | Example 7 | Example 8 |
|---|---|---|---|---|---|---|---|---|---|---|
| Ethylene-α-olefin copolymer | | | A-1 | A-2 | A-3 | A-4 | A-5 | A-6 | A-7 | A-8 |
| Polymerization conditions in latter stage polymerization reactor | Ethylene supply rate | $Nm^3/h$ | | 5.5 | | | 6.5 | 6.5 | 7.3 | |
| | Hydrogen supply rate | $Nm^3/h$ | | 0.0600 | | | 0.0700 | 0.0095 | 0.0070 | |
| | 1-Hexene supply rate | kg/h | | 0.95 | | | 1.00 | 0.70 | 0.80 | |
| | Polymerization temperature | °C | | 75 | | | 75 | 75 | 75 | |
| | Polymerization pressure | MPa·G | | 1.1 | | | 1.4 | 2.3 | 2.3 | |
| | Ethylene partial pressure | MPa·A | | 0.9 | | | 1.2 | 2.0 | 2.0 | |
| | Gas linear velocity | m/sec | | 0.40 | | | 0.40 | 0.40 | 0.40 | |
| | Residence time | hr | | 7.1 | | | 2.8 | 3.3 | 3.4 | |
| | Vapor phase: hydroaen/ ethylene ratio | m.r. ($\times 10^{-4}$) | | 33 | | | 37 | 48 | 29 | |
| | Vapor phase: 1-hexene/ethylene ratio | m.r. | | 0.009 | | | 0.009 | 0.009 | 0.008 | |
| Two stage polymer yield | | kg/h | | 14.1 | | | 12.5 | 10.5 | 10.2 | |

(continued)

| | | | Example 9 | Example 10 | Example 11 | Example 12 | Comparative Example 1 | Example 13 | Example 14 |
|---|---|---|---|---|---|---|---|---|---|
| Ethylene-α-olefin copolymer | | | A-9 | A-10 | A-11 | A-12 | a-1 | A-13 | A-14 |
| Polymerization conditions in former stage polymerization reactor | Prepolymerized catalyst component | No. | XP-1 | XP-1 | XP-1 | XP-1 | XP-2 | XP-1 | XP-1 |
| | Prepolymerized catalyst supply rate | g/hr | 7.7 | 7.2 | 4.3 | 5.1 | 2.3 | 5.5 | 4.3 |
| | Ethylene supply rate | $Nm^3/h$ | 10.5 | 5.6 | 5.7 | 5.5 | 4.0 | 6.8 | 6.0 |
| | Hydrogen supply rate | $Nm^3/h$ | 0.0380 | 0.0050 | 0.0039 | 0.0049 | 0.0075 | 0.0035 | 0.0220 |
| | 1-Hexene supply rate | kg/h | 0.60 | 0.90 | 0.66 | 0.81 | 0.50 | 0.95 | 0.70 |
| | Polymerization temperature | °C | 80 | 75 | 79 | 75 | 84 | 80 | 75 |
| | Polymerization pressure | MPa·G | 2.0 | 1.7 | 1.7 | 1.7 | 1.6 | 1.7 | 1.7 |
| | Ethylene partial pressure | MPa·A | 1.5 | 1.0 | 1.0 | 1.0 | 0.7 | 1.0 | 1.0 |
| | Electrostripper EA supply rate | g/h | 0.094 | 0.048 | - | - | - | 0.073 | 0.047 |
| | Chemistat 2500 supply rate | g/h | - | - | 0.353 | 0.340 | 0.200 | - | - |
| | Gas linear velocity | m/sec | 0.70 | 0.70 | 0.70 | 0.70 | 0.70 | 0.70 | 0.70 |
| | Residence time | hr | 5.1 | 4.3 | 5.0 | 5.1 | 6.0 | 3.9 | 5.1 |

(continued)

| | | | Example 9 | Example 10 | Example 11 | Example 12 | Comparative Example 1 | Example 13 | Example 14 |
|---|---|---|---|---|---|---|---|---|---|
| Ethylene-α-olefin copolymer | | | A-9 | A-10 | A-11 | A-12 | a-1 | A-13 | A-14 |
| | Vapor phase: hydrogen/ ethylene ratio | m.r. ($\times10^{-4}$) | 19 | 19 | 17 | 20 | 20 | 6.5 | 18 |
| | Vapor phase: 1-hexene/ethylene ratio | m.r. | 0.007 | 0.010 | 0.008 | 0.010 | 0.011 | 0.008 | 0.007 |
| Polymer yield in former stage polymerization reactor | | kg/h | 4.7 | 5.6 | 4.8 | 4.7 | 4.0 | 6.1 | 4.7 |

(continued)

| | | | Example 9 | Example 10 | Example 11 | Example 12 | Comparative Example 1 | Example 13 | Example 14 |
|---|---|---|---|---|---|---|---|---|---|
| Ethylene-α-olefin copolymer | | | A-9 | A-10 | A-11 | A-12 | a-1 | A-13 | A-14 |
| Polymerization conditions in latter stage polymerization reactor | Ethylene supply rate | $Nm^3/h$ | | | | | | | |
| | Hydrogen supply rate | $Nm^3/h$ | | | | | | | |
| | 1-Hexene supply rate | kg/h | | | | | | | |
| | Polymerization temperature | °C | | | | | | | |
| | Polymerization pressure | MPa·G | | | | | | | |
| | Ethylene partial pressure | MPa·A | | | | | | | |
| | Gas linear velocity | m/sec | | | | | | | |
| | Residence time | hr | | | | | | | |
| | Vapor phase: hydroaen/ ethylene ratio | m.r. ($\times 10^{-4}$) | | | | | | | |
| | Vapor phase: 1-hexene/ethylene ratio | m.r. | | | | | | | |
| Two stage polymer yield | | kg/h | | | | | | | |

Table 9

| | | Example 1 | Example 2 | Example 3 | Example 4 | Example 5 | Example 6 | Example 7 | Example 8 |
|---|---|---|---|---|---|---|---|---|---|
| Ethylene-α-olefin copolymer | | A-1 | A-2 | A-3 | A-4 | A-5 | A-6 | A-7 | A-8 |
| Density | $kg/m^3$ | 904 | 909 | 911 | 911 | 912 | 916 | 912 | 908 |
| MFR (190°C, 2.16 kg) | g/10 min | 7.4 | 5.0 | 6.3 | 6.5 | 5.2 | 8.8 | 4.4 | 6.4 |
| MT (190°C) | g | 3.6 | 6.1 | 4.6 | 4.4 | 5.7 | 3.6 | 5.6 | 4.8 |
| [η] | dl/g | 1.13 | 1.24 | 1.16 | 1.18 | 1.22 | 1.1 | 1.18 | 1.14 |
| η* | P | 19000 | 27200 | 21100 | 20300 | 24600 | 17100 | 28000 | 20900 |
| MT/η* | g/P | 1.89E-04 | 2.24E-04 | 2.17E-04 | 2.16E-04 | 2.30E-04 | 2.10E-04 | 1.99E-04 | 2.29E-04 |
| $\eta_0$ | P | 3.19E+04 | 6.11 E+04 | 3.96E+04 | 3.64E+04 | 5.15E+04 | 3.05E+04 | 6.00E+04 | 3.92E+04 |
| $[\eta]/Mw^{0.776}\times10$^4 | | 1.03 | 1.02 | 0.97 | 0.98 | 0.92 | 1.05 | 1.05 | 0.90 |
| $\eta_0/Mw^{3.4}\times10$^13 | | 0.63 | 0.77 | 0.54 | 0.48 | 0.46 | 0.76 | 1.09 | 0.42 |
| GPC-visco | | | | | | | | | |
| Mn | | 1.96E+04 | 1.68E+04 | 1.94E+04 | 1.99E+04 | 1.81 E+04 | 1.31E+04 | 1.81E+04 | 1.76E+04 |
| Mw | | 1.61E+05 | 1.84E+05 | 1.79E+05 | 1.81E+05 | 2.04E+05 | 1.51E+05 | 1.65E+05 | 1.92E+05 |
| Mz | | 1.61E+06 | 1.67E+06 | 2.05E+06 | 1.84E+06 | 2.20E+06 | 1.91E+06 | 1.80E+06 | 3.18E+06 |
| Mw/Mn | | 8.25 | 10.93 | 9.26 | 9.08 | 11.29 | 11.55 | 9.12 | 10.95 |
| Mz/Mw | | 9.97 | 9.06 | 11.4 | 10.2 | 10.8 | 12.6 | 10.9 | 16.5 |
| Mz/Mw-Mw/Mn | | 1.72 | -1.87 | 2.15 | 1.11 | -0.50 | 1.09 | 1.78 | 5.57 |
| $^1$H NMR | | | | | | | | | |
| Vinyl | Number/ 1000 C | 0.24 | 0.17 | 0.24 | 0.28 | 0.23 | 0.24 | 0.25 | 0.28 |
| Vinylidene | Number/ 1000 C | 0.12 | 0.11 | 0.10 | 0.11 | 0.09 | 0.08 | 0.10 | 0.11 |
| Disubstituted internal olefin | Number/ 1000 C | 0.19 | 0.19 | 0.19 | 0.19 | 0.16 | 0.12 | 0.11 | 0.14 |

(continued)

| | | | | | | | | | | |
|---|---|---|---|---|---|---|---|---|---|---|
| $^1$H NMR | | | | | | | | | | |
| Trisubstituted internal olefin | Number/ 1000 C | 0.21 | 0.20 | 0.19 | 0.17 | 0.13 | 0.08 | 0.09 | 0.14 | |
| Total | Number/ 1000 C | 0.76 | 0.67 | 0.72 | 0.75 | 0.61 | 0.52 | 0.55 | 0.67 | |
| DSC melting curve peak | | Plural | Plural | Plural | Plural | Plural | Plural | Plural | Plural | |
| | | Example 9 | Example 10 | Example 11 | Example 12 | Comparative Example 1 | Comparative Example 2 | Comparative Example 3 | Example 13 | Example 14 |
| Ethylene-α-olefin copolymer | | A-9 | A-10 | A-11 | A-12 | a-1 | | a-3 | A-13 | A-14 |
| Density | kg/m$^3$ | 920 | 907 | 918 | 911 | 922 | 918 | 920 | 910 | 910 |
| MFR (190°C, 2.16 kg) | g/10 min | 4.5 | 5.1 | 11.5 | 12.2 | 11.3 | 6.5 | 1.2 | 3.8 | 6.0 |
| MT (190°C) | g | 5.7 | 5.8 | 2.3 | 2.1 | 4.9 | 8.5 | 8.2 | 6.0 | 4.2 |
| [η] | dl/g | 1.19 | 1.19 | 1.12 | 1.08 | 1.28 | - | 1.51 | 1.35 | 1.21 |
| η* | P | 26600 | 24100 | 12800 | 11900 | 9960 | 13200 | 65000 | 27200 | 19200 |
| MT/η* | g/P | 2.12E-04 | 2.42E-04 | 1.83E-04 | 1.80E-04 | 4.92E-04 | 6.44E-04 | 1.26E-04 | 2.21E-04 | 2.20E-04 |
| $\eta_0$ | P | 4.96E+04 | 5.41E+04 | 1.76E+04 | 1.65E+04 | 1.91E+04 | - | 7.83E+05 | 5.08E+04 | 3.20E+04 |
| [η]/Mw$^{0.776}$ ×10^4 | | 1.15 | 0.98 | 1.05 | 1.03 | 0.83 | - | 1.39 | 0.85 | 0.85 |
| $\eta_0$/Mw$^{3.4}$ ×10^13 | | 1.29 | 0.68 | 0.40 | 0.40 | 0.09 | - | 16.1 | 0.20 | 0.20 |
| GPC-visco | | | | | | | | | | |
| Mn | | 1.88E+04 | 1.86E+04 | 2.21E+04 | 2.42E+04 | 1.79E+04 | - | 2.44E+04 | 2.32E+04 | 2.16E+04 |
| Mw | | 1.48E+05 | 1.84E+05 | 1.55E+05 | 1.52E+05 | 2.49E+05 | - | 1.59E+05 | 2.59E+05 | 2.26E+05 |
| Mz | | 1.70E+06 | 1.90E+06 | 2.57E+06 | 2.09E+06 | 3.48E+06 | - | 7.68E+05 | 3.49E+06 | 2.55E+06 |
| Mw/Mn | | 7.88 | 9.86 | 7.03 | 6.26 | 13.9 | - | 6.52 | 11.2 | 10.5 |
| Mz/Mw | | 11.5 | 10.3 | 16.6 | 13.8 | 13.9 | - | 4.82 | 13.5 | 11.3 |

(continued)

| | | Example 9 | Example 10 | Example 11 | Example 12 | Comparative Example 1 | Comparative Example 2 | Comparative Example 3 | Example 13 | Example 14 |
|---|---|---|---|---|---|---|---|---|---|---|
| Ethylene-α-olefin copolymer | | A-9 | A-10 | A-11 | A-12 | a-1 | | a-3 | A-13 | A-14 |
| Mz/Mw-Mw/Mn | | 3.58 | 0.46 | 9.6 | 7.6 | 0.05 | - | -1.70 | 2.27 | 0.80 |
| $^1$H NMR | | | | | | | | | | |
| Vinyl | Number /1000 C | 0.26 | 0.28 | 0.25 | 0.27 | 0.33 | - | - | 0.26 | 0.26 |
| Vinylidene | Number /1000 C | 0.07 | 0.11 | 0.10 | 0.11 | 0.19 | - | - | 0.11 | 0.11 |
| Disubstituted internal olefin | Number /1000 C | 0.14 | 0.15 | 0.21 | 0.17 | 0.28 | - | - | 0.24 | 0.19 |
| Trisubstituted internal olefin | Number /1000 C | 0.09 | 0.16 | 0.19 | 0.16 | 0.79 | - | - | 0.22 | 0.18 |
| Total | Number /1000 C | 0.56 | 0.69 | 0.75 | 0.71 | 1.59 | - | - | 0.83 | 0.74 |
| DSC melting curve peak | | Plural | Plural | Plural | Plural | Plural | - | - | Plural | Plural |

Table 10

| | | B-1 | b-2 | B-3 |
|---|---|---|---|---|
| | | GD1588 | 2006H | SP1510 |
| Density | kq/$m^3$ | 925 | 920 | 915 |
| MFR (190°C, 2.16 kg) | g/10 min | 2.3 | 0.6 | 1.0 |
| MT (190°C) | g | 1.0 | 5.2 | 2.1 |
| η* | P | 3.58E+04 | 1.10E+05 | 5.64E+04 |
| MT/η* | g/P | 2.82E-05 | 4.73E-05 | 3.72E-05 |
| GPC | | | | |
| Amount of component with log molecular weight ≥ 5.8 | % | 0.3 | 5.1 | 0.6 |

Table 11

| | | Example 1 | Example 2 | Example 3 | Example 4 | Example 5 | Example 6 | Example 7 |
|---|---|---|---|---|---|---|---|---|
| Ethylene-α-olefin copolymer | | A-1 | A-2 | A-3 | A-4 | A-5 | A-6 | A-7 |
| MFR | g /10 min | 7.4 | 5.0 | 6.3 | 6.5 | 5.2 | 8.8 | 4.4 |
| Density | kg/$m^3$ | 904 | 909 | 911 | 911 | 912 | 916 | 912 |
| Extrusion lamination formability (temperature at die = 320°C) | | | | | | | | |
| Neck-in (80 m/min) | mm | 74 | 53 | 60 | 62 | 56 | 79 | 67 |
| Film break speed | m/min | >300 | 245 | 300 | >300 | 280 | >300 | 240 |
| Take-off surging | | No occurrence | No occurrence | No occurrence | No occurrence | No occurrence | No occurrence | No occurrence |
| AL adhesive strength ratio (temperature at die = 320°C, take-up speed = 150 m/min, thickness = 15 um, configuration: PET substrate / AC / resin to be evaluated / aluminum vapor deposition PET) | | | | | | | | |
| AL adhesive strength/ LDPE AL adhesive strength | Times | 2.08 | 1.80 | 1.84 | 1.91 | 1.87 | 1.52 | 1.29 |
| Tear strength / trouser tear test (temperature under die = 320°C, take-up speed 80 m/min, thickness = 20 um, configuration: kraft paper / resin to be evaluated) | | | | | | | | |
| Tear strength MD | N | 4.2 | 3.9 | 3.8 | 3.8 | 3.7 | 3.1 | 4.2 |
| Tear strength TD | N | 3.8 | 3.2 | 3.7 | 3.7 | 3.7 | 3.3 | 3.7 |
| | | Example 8 | Example 9 | Example 10 | Example 11 | Example 12 | Comparative Example 1 | Comparative Example 2 |
| Ethylene-α-olefin copolymer | | A-8 | A-9 | A-10 | A-11 | A-12 | a-1 | |
| MFR | g /10 min | 6.4 | 4.5 | 5.1 | 11.5 | 12.2 | 11.8 | 6.5 |
| Density | kg/$m^3$ | 908 | 920 | 907 | 918 | 911 | 922 | 918 |
| Extrusion lamination formability (temperature at die = 320°C) | | | | | | | | |
| Neck-in (80 m/min) | mm | 65 | 63 | 65 | 92 | 107 | 55 | 30 |
| Film break speed | m/min | 298 | 250 | 200 | >300 | >300 | >300 | >300 |
| Take-off surging | | No occurrence | No occurrence | No occurrence | No occurrence | No occurrence | No occurrence | No occurrence |
| AL adhesive strength ratio (temperature under die = 320°C, take-up speed = 150 m/min, thickness = 15 um, configuration: PET substrate / AC / resin to be evaluated / aluminum vapor deposition PET) | | | | | | | | |

(continued)

| | | Example 8 | Example 9 | Example 10 | Example 11 | Example 12 | Comparative Example 1 | Comparative Example 2 |
|---|---|---|---|---|---|---|---|---|
| AL adhesive strength/ LDPE AL adhesive strength | Times | 1.91 | 1.10 | 1.84 | 1.27 | 1.66 | 1.74 | 1.0 |
| Tear strength / trouser tear test (temperature at die = 320°C, take-up speed 80 m/min, thickness = 20 um, configuration: kraft paper / resin to be evaluated) | | | | | | | | |
| Tear strength MD | N | 3.6 | 3.6 | 4.0 | 3.7 | 3.9 | 1.7 | 1.1 |
| Tear strength TD | N | 3.4 | 3.8 | 4.0 | 3.8 | 3.9 | 2.2 | 1.1 |

Table 12

| | | | Example 1 | Example 2 | Example 3 | Example 4 | Example 5 | Example 6 | Example 7 |
|---|---|---|---|---|---|---|---|---|---|
| Ethylene-α-olefin copolymer | | | A-1 | A-2 | A-3 | A-4 | A-5 | A-6 | A-7 |
| MFR | | g /10 min | 7.4 | 5.0 | 6.3 | 6.5 | 5.2 | 8.8 | 4.4 |
| Density | | kg/m$^3$ | 904 | 909 | 911 | 911 | 912 | 916 | 912 |
| Cast film physical properties | | | | | | | | | |
| Film thickness | | μm | 40 | 40 | 40 | 40 | 40 | 40 | 40 |
| Haze | | % | 15.0 | 29.9 | 14.7 | 15.5 | 27.4 | 12.4 | 14.8 |
| Internal haze | | % | 0.4 | 0.9 | 0.3 | 0.3 | 0.6 | 0.77 | 0.43 |
| Gloss 20° | | % | 12 | 4 | 7.6 | 8.3 | 4.5 | 11.2 | 9.1 |
| Tensile stress at break | MD | MPa | 29.7 | 29.8 | 29.0 | 30.8 | 30.1 | 27.0 | 31.1 |
| | TD | MPa | 30.3 | 28.0 | 29.0 | 30.9 | 29.2 | 25.5 | 28.5 |
| Tensile elongation at break | MD | % | 617 | 526 | 575 | 591 | 557 | 510 | 514 |
| | TD | % | 763 | 679 | 706 | 703 | 667 | 663 | 683 |
| Tensile modulus | MD | MPa | 95 | 108 | 142 | 143 | 170 | 251 | 169 |
| | TD | MPa | 101 | 145 | 156 | 156 | 173 | 270 | 178 |
| Dart impact | A method | 9 | 474 | 233 | 280 | 375 | 300 | 167 | 337 |
| | | | Example 8 | Example 9 | Example 10 | Example 11 | Example 12 | Comparative Example 1 | Comparative Example 2 |
| Ethylene-α-olefin copolymer | | | A-8 | A-9 | A-10 | A-11 | A-12 | a-1 | |
| MFR | | g /10 min | 6.4 | 4.5 | 5.1 | 11.5 | 12.2 | 11.8 | 6.5 |
| Density | | kg/m$^3$ | 908 | 920 | 907 | 918 | 911 | 922 | 918 |
| Cast film physical properties | | | | | | | | | |
| Film thickness | | μm | 40 | 40 | 40 | 40 | 40 | 40 | 40 |
| Haze | | % | 15.3 | 16.0 | 19.6 | 7.7 | 6.7 | 38 | 19.9 |
| Internal haze | | % | 0.41 | 0.5 | 0.44 | 0.4 | 0.4 | 1.1 | 0.4 |
| Gloss 20° | | % | 9.5 | 8.9 | 6 | 19 | 23 | 2 | 5 |

(continued)

| | | | Example 8 | Example 9 | Example 10 | Example 11 | Example 12 | Comparative Example 1 | Comparative Example 2 |
|---|---|---|---|---|---|---|---|---|---|
| Tensile stress at break | MD | MPa | 31.2 | 28.6 | 32.9 | 27.7 | 27.8 | 21.2 | 19.5 |
| | TD | MPa | 29.3 | 26.2 | 29.4 | 26.5 | 26.2 | 19.4 | 15.8 |
| Tensile elongation at break | MD | % | 581 | 499 | 565 | 603 | 718 | 474 | 265 |
| | TD | % | 715 | 644 | 688 | 675 | 682 | 505 | 455 |
| Tensile modulus | MD | MPa | 125 | 266 | 136 | 213 | 133 | 284 | 182 |
| | TD | MPa | 126 | 308 | 141 | 226 | 129 | 315 | 218 |
| Dart impact | A method | g | 383 | 171 | 470 | 178 | 255 | 127 | 105 |

Table 13

| | | | Example 15 | Example 16 | Example 17 | Example 18 | Example 19 |
|---|---|---|---|---|---|---|---|
| Ethylene-α-olefin copolymer (A) | No. | | A-13 | A-13 | A-13 | A-14 | A-14 |
| | Mass fraction | % by mass | 5 | 10 | 15 | 60 | 80 |
| Ethylene-α-olefin copolymer (B) | No. | | B-1 | B-1 | B-1 | B-3 | B-3 |
| | Mass fraction | % by mass | 95 | 90 | 85 | 40 | 20 |
| Ethylene resin composition (Z) | Melt tension of composition | g | 2.0 | 2.6 | 3.8 | 4.7 | 4.7 |
| | Melt film stability | | AA | AA | AA | AA | AA |
| | Film thickness | μm | 40 | 40 | 40 | 40 | 40 |
| | Haze | % | 17 | 16 | 16 | 14 | 18 |
| | Internal haze | % | 3.4 | 3.2 | 2.9 | 1.3 | 1.0 |
| | Gloss 20° | % | 25 | 23 | 17 | 16 | 9 |
| | Dart impact (A method) | g | 241 | 234 | 232 | 617 | 387 |
| | Tensile modulus MD | MPa | 487 | 485 | 442 | 241 | 203 |
| | Tensile modulus TD | MPa | 576 | 592 | 563 | 284 | 254 |
| | | | Example 20 | Example 21 | Comparative Example 4 | Comparative Example 5 | Reference Example 1 |
| Ethylene-α-olefin copolymer (A) | No. | | A-6 | A-6 | a-3 | | A-13 |
| | Mass fraction | % by mass | 20 | 30 | 80 | | 15 |
| Ethylene-α-olefin copolymer (B) | No. | | B-1 | B-1 | B-3 | B-1 | b-2 |
| | Mass fraction | % by mass | 80 | 70 | 20 | 100 | 85 |

(continued)

| | | | Example 20 | Example 21 | Comparative Example 4 | Comparative Example 5 | Reference Example 1 |
|---|---|---|---|---|---|---|---|
| Ethylene resin composition (Z) | Melt tension of composition | g | 2.4 | 2.9 | - | 1.2 | 6.4 |
| | Melt film stability | | AA | AA | AA | CC | AA |
| | Film thickness | μm | 40 | 40 | 40 | 40 | 40 |
| | Haze | % | 14 | 12 | 57 | 30 | 25 |
| | Internal haze | % | 3.9 | 3.6 | 2.1 | 4.8 | 1.8 |
| | Gloss 20° | % | 36 | 39 | 1.0 | 6.1 | 4.3 |
| | Dart impact (A method) | g | 215 | 193 | 280 | 235 | 79 |
| | Tensile modulus MD | MPa | 451 | 445 | 395 | 483 | 319 |
| | Tensile modulus TD | MPa | 554 | 514 | 353 | 597 | 426 |

**Claims**

1. An ethylene-α-olefin copolymer (A) which is a copolymer of ethylene and one or more α-olefins having 4 to 10 carbon atoms, and which satisfies the following requirements (1) to (7) :

   (1) the density is in a range of 890 kg/m$^3$ or more and 925 kg/m$^3$ or less;
   (2) the melt flow rate (MFR) at 190°C under a load of 2.16 kg is in a range of 3.0 g/10 min or more and 15.0 g/10 min or less;
   (3) the ratio [MT/η* (g/P)] of the melt tension [MT (g)] at 190°C to the shear viscosity [η* (P)] at 200°C at the angular velocity of 1.0 rad/s is in a range of $1.40 \times 10^{-4}$ or more and $2.90 \times 10^{-4}$ or less;
   (4) the zero shear viscosity [$\eta_0$ (P)] at 200°C and the weight average molecular weight (Mw) as measured by GPC-viscometry (GPC-VISCO) satisfy the following equation (Eq-1):

$$0.01 \times 10^{-13} \times Mw^{3.4} \leq \eta_0 \leq 4.5 \times 10^{-13} \times Mw^{3.4} \quad ... \text{ (Eq-1)};$$

   (5) the number average molecular weight (Mn), the weight average molecular weight (Mw), and the Z average molecular weight (Mz) as measured by GPC-viscometry (GPC-VISCO) satisfy the following equation (Eq-2):

$$-2.0 \leq Mz/Mw - Mw/Mn \leq 15 \quad ... \text{ (Eq-2)};$$

   (6) the total number of vinyls, vinylidenes, disubstituted internal olefins, and trisubstituted internal olefins per 1000 carbon atoms (number/1000 C) as measured by $^1$H-NMR is in a range of 0.1 or more and 1.0 or less; and
   (7) a plurality of peaks is present in a melting curve obtained by differential scanning calorimetry (DSC).

2. The ethylene-α-olefin copolymer (A) according to claim 1, further satisfying the following requirement (8):
   (8) the ratio Mz/Mw of the Z average molecular weight (Mz) to the weight average molecular weight (Mw) as measured by GPC-viscometry (GPC-VISCO) is in a range of 4.0 or more and 25.0 or less.

3. The ethylene-α-olefin copolymer (A) according to claim 1 or 2, further satisfying the following requirement (9):
   (9) the intrinsic viscosity [[η] (dl/g)] measured in decalin at 135°C and the weight average molecular weight (Mw)

as measured by GPC-viscometry (GPC-VISCO) satisfy the following equation (Eq-4):

$$0.8 \times 10^{-4} \times Mw^{0.776} \leq [\eta] \leq 1.65 \times 10^{-4} \times Mw^{0.776} \quad \ldots \text{(Eq-4)}.$$

**4.** A thermoplastic resin composition (Y) comprising: the ethylene-α-olefin copolymer (A) according to any one of claims 1 to 3, and a thermoplastic resin excluding the ethylene-α-olefin copolymer (A).

**5.** The thermoplastic resin composition (Y) according to claim 4, wherein

the thermoplastic resin is an ethylene-α-olefin copolymer (B) satisfying the following requirements (a) to (d), and the composition is an ethylene resin composition (Z) having a mass faction ($W_A$) of the ethylene-α-olefin copolymer (A) that is 5% by mass or more and 90% by mass or less and a mass fraction ($W_B$) of the ethylene-α-olefin copolymer (B) that is 10% by mass or more and 95% by mass or less, with the proviso that the sum of $W_A$ and $W_B$ is 100% by mass:

(a) the density is in a range of 890 kg/m$^3$ or more and 930 kg/m$^3$ or less;
(b) the melt flow rate (MFR) at 190°C under a load of 2.16 kg is in a range of 0.1 g/10 min or more and 20 g/10 min or less;
(c) the ratio [MT/η* (g/P)] of the melt tension [MT (g)] at 190°C to the shear viscosity [η* (P)] at 200°C at the angular velocity of 1.0 rad/s is in a range of $1.0 \times 10^{-6}$ or more and $1.0 \times 10^{-4}$ or less; and
(d) the amount (%) of a component with a Log molecular weight of 5.8 or more in a molecular weight distribution curve obtained by GPC measurement is in a range of 0.01% or more and 5.0% or less.

**6.** A film comprising the ethylene-α-olefin copolymer (A) according to any one of claims 1 to 3 or the thermoplastic resin composition (Y) according to claim 4 or 5.

**7.** The film according to claim 6, comprising the ethylene-α-olefin copolymer (A) according to any one of claims 1 to 3.

**8.** The film according to claim 6, comprising the thermoplastic resin composition (Y) according to claim 4.

**9.** The film according to claim 6, comprising the thermoplastic resin composition (Y) according to claim 5.

**10.** A laminate comprising a layer comprising the ethylene-α-olefin copolymer (A) according to any one of claims 1 to 3 or the thermoplastic resin composition (Y) according to claim 4 or 5.

**11.** The laminate according to claim 10, further comprising a substrate layer.

**12.** The laminate according to claim 11, further comprising a barrier layer.

**13.** The laminate according to any one of claims 10 to 12, comprising the layer comprising the ethylene-α-olefin copolymer (A) according to any one of claims 1 to 3.

**14.** The laminate according to any one of claims 10 to 12, comprising the layer comprising the thermoplastic resin composition (Y) according to claim 4.

**15.** The laminate according to any one of claims 10 to 12, comprising the layer comprising the thermoplastic resin composition (Y) according to claim 5.

**16.** A method for producing a laminate, comprising extrusion-laminating the ethylene-α-olefin copolymer (A) according to any one of claims 1 to 3 or the thermoplastic resin composition (Y) according to claim 4 or 5 between a substrate layer and a barrier layer.

## INTERNATIONAL SEARCH REPORT

International application No.
**PCT/JP2022/015846**

### A. CLASSIFICATION OF SUBJECT MATTER

***B32B 27/32***(2006.01)i; ***C08F 210/02***(2006.01)i; ***C08F 210/16***(2006.01)i; ***C08L 23/08***(2006.01)i
FI: C08F210/02; B32B27/32 103; B32B27/32 Z; C08F210/16; C08L23/08

According to International Patent Classification (IPC) or to both national classification and IPC

### B. FIELDS SEARCHED

Minimum documentation searched (classification system followed by classification symbols)

C08F210; C08L23

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2019-59933 A (MITSUI CHEMICALS INC) 18 April 2019 (2019-04-18)<br>claims, paragraph [0175], example 13 | 1-4, 6-8, 10-16<br>5, 9 |
| Y<br>A | JP 2019-59723 A (MITSUI CHEMICALS INC) 18 April 2019 (2019-04-18)<br>claims, paragraph [0182], example 4 | 1-4, 6-8, 10-16<br>5, 9 |
| Y | JP 11-222505 A (TOSOH AKZO KK) 17 August 1999 (1999-08-17)<br>paragraph [0003] | 1-4, 6-8, 10-16 |
| Y | JP 2009-144148 A (MITSUI CHEMICALS INC) 02 July 2009 (2009-07-02)<br>paragraphs [0004]-[0006] | 1-4, 6-8, 10-16 |
| Y | JP 63-37149 A (EXXON CHEMICAL PATENTS INC) 17 February 1988 (1988-02-17)<br>p. 2 | 1-4, 6-8, 10-16 |
| Y | JP 10-506952 A (BOREALIS A/S) 07 July 1998 (1998-07-07)<br>p. 5, lines 1-3 | 1-4, 6-8, 10-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/015846

C. DOCUMENTS CONSIDERED TO BE RELEVANT

| Category* | Citation of document, with indication, where appropriate, of the relevant passages | Relevant to claim No. |
|---|---|---|
| A | JP 2015-127431 A (SUMITOMO CHEMICAL COMPANY, LIMITED) 09 July 2015 (2015-07-09) entire text | 1-16 |

Form PCT/ISA/210 (second sheet) (January 2015)

**INTERNATIONAL SEARCH REPORT**
**Information on patent family members**

International application No.
**PCT/JP2022/015846**

| Patent document cited in search report | Publication date (day/month/year) | Patent family member(s) | Publication date (day/month/year) |
|---|---|---|---|
| JP 2019-59933 A | 18 April 2019 | (Family: none) | |
| JP 2019-59723 A | 18 April 2019 | (Family: none) | |
| JP 11-222505 A | 17 August 1999 | (Family: none) | |
| JP 2009-144148 A | 02 July 2009 | US 2010/0292421 A1<br>paragraphs [0004]-[0006]<br>WO 2009/066689 A1<br>EP 2218725 A1<br>KR 10-2010-0076056 A<br>CN 101868471 A | |
| JP 63-37149 A | 17 February 1988 | US 4722971 A<br>column 1, lines 9-36<br>EP 227206 A1<br>KR 10-1987-0002190 A | |
| JP 10-506952 A | 07 July 1998 | US 6300420 B1<br>column 1, lines 40-44<br>WO 1996/011216 A1<br>EP 785954 A1<br>CN 1163621 A | |
| JP 2015-127431 A | 09 July 2015 | WO 2012/002555 A1<br>CN 102958961 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H07026079 A
- JP H02276807 A
- JP H04213309 A
- WO 9308221 A
- JP H08311260 A
- JP 2006233207 A
- JP 2009197225 A
- WO 2013099927 A
- JP 2014177506 A
- JP 2006509059 A
- WO 2009080216 A
- JP 2011500800 A
- JP 2012012307 A
- JP 2012121882 A
- JP 2014196319 A
- JP 2014513735 A
- JP 2015063495 A
- JP 2016501952 A
- JP 2019059933 A
- JP H10109996 A
- JP 2011502192 A
- WO 2014123212 A
- JP H07042301 B
- JP H06220126 A
- JP H06220128 A
- JP H11140113 A
- JP H11310607 A
- JP 2000038410 A
- JP 2000095810 A
- WO 201055652 A
- JP 2003171412 A
- JP H01501950 A
- JP H10502036 A
- JP H03179005 A
- JP H03179006 A
- JP H03207703 A
- JP H03207704 A
- US 5321106 B
- JP 5455354 B
- JP H04069394 A
- JP 5943941 B


### Non-patent literature cited in the description


- **WALTER KAMINSKY.** *Makromol. Chem.,* 1992, vol. 193, 606
- **KAZUO SOGA et al.** Catalytic Olefin Polymerization. Kodansha Scientific Ltd, 1990, 376
- **KAZUO MATSUURA et al.** Polyethylene Technical Guidebook. Kogyo Chosakai Publishing Co., Ltd, 2001, 32, , 36
- **C GABRIEL ; H. MUNSTEDT.** *J. Rheol.,* 2003, vol. 47 (3), 619
- **H. SAIKI ; S. MAKOTO ; T. MASAO ; S. MORIHIKO ; Y. AKIHIRO.** *J. Polym. Sci., A: Polym. Chem.,* 2000, vol. 38, 4641
- **WALTHER BURCHARD.** ADVANCES IN POLYMER SCIENCE. *Branched Polymer,* 1999, vol. 143, 137
- *Organometallics,* 1994, vol. 13, 954
- *Organometallics,* 2006, vol. 25, 1217
- *Bioorg. Med. Chem,* 2008, vol. 16, 7399
- *Organometallics,* 2011, vol. 30, 5744
- *Organometallics,* 2012, vol. 31, 4962
- *Chem. Eur. J.,* 2012, vol. 18, 4174
- *Macromolecules,* 2001, vol. 34, 2072
- *Macromolecules,* 2003, vol. 36, 9325
- *Organometallics,* 2004, vol. 23, 5332
- *Eur. J. Inorg. Chem.,* 2005, 1003
- *Eur. J. Inorg. Chem.,* 2009, 1759
- *Organometallics,* 1999, vol. 18, 5347
- *Organometallics,* 2012, vol. 31, 4340